(19) Europäisches Patentamt
European Patent Office
Office européen des brevets

(11) **EP 4 429 301 A1**

(12) **EUROPEAN PATENT APPLICATION**
published in accordance with Art. 153(4) EPC

(43) Date of publication:
**11.09.2024  Bulletin 2024/37**

(21) Application number: **23739861.5**

(22) Date of filing: **04.01.2023**

(51) International Patent Classification (IPC):
*H04W 16/10* (2009.01)

(52) Cooperative Patent Classification (CPC):
**H04W 16/10; H04W 72/0446; H04W 72/1263**

(86) International application number:
**PCT/CN2023/070447**

(87) International publication number:
**WO 2023/134517 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **11.01.2022  CN 202210027808**

(71) Applicant: **Huawei Technologies Co., Ltd.
Shenzhen, Guangdong 518129 (CN)**

(72) Inventor: **HUI, Shaobo
Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **TIME RESOURCE SCHEDULING METHOD AND APPARATUS IN WIRELESS LOCAL AREA NETWORK, AND READABLE STORAGE MEDIUM**

(57)    This application relates to the field of wireless communication, and is applied to a wireless local area network that supports the 802.11 standards, and in particular, to a method for scheduling a time resource in a wireless local area network, an apparatus, and a readable storage medium. The method includes: An AP advertises TXOP grant information, where the TXOP grant information includes a start time and duration of each TXOP in a reserve period of each service interval in one beacon interval, and a device to which each TXOP is granted; and after receiving the TXOP grant information, a STA or another AP determines, based on the TXOP grant information, a mode used by the STA or the another AP to contend for a time resource. According to embodiments of this application, latency instability caused by air interface contention can be resolved, and signaling overheads and a transmission latency can be reduced.

FIG. 5

## Description

This application claims priority to Chinese Patent Application No. 202210027808.3, filed with the China National Intellectual Property Administration on January 11, 2022 and entitled "METHOD FOR SCHEDULING TIME RESOURCE IN WIRELESS LOCAL AREA NETWORK, APPARATUS, AND READABLE STORAGE MEDIUM", which is incorporated herein by reference in its entirety.

## TECHNICAL FIELD

This application relates to the field of wireless communication technologies, and in particular, to a method for scheduling a time resource in a wireless local area network, an apparatus, and a readable storage medium.

## BACKGROUND

With the rapid development of smart home (Smart Home), people have increasingly high requirements on whole-house music, whole-house light effect control, and the like. For whole-house music, a requirement for a one-to-many audio transmission latency is strict (the latency needs to be within 30 milliseconds), and cross-room light effect control requires a stable transmission latency that is within 20 milliseconds (ms). To resolve this problem, wired transmission is widely used in the industry. However, wired transmission requires users to route cables in advance during decoration. Consequently, deployment requirements and costs are high. Using wireless transmission rather than wired transmission can lower deployment requirements and cut costs.

Currently, Wi-Fi is the main network deployment manner of a home wireless network. However, it is difficult for a Wi-Fi network to provide a stable transmission latency due to air interface collision detection mechanisms (for example, a random access mechanism like carrier sense multiple access with collision avoidance (carrier sense multiple access with collision avoidance, CSMA/CA), and enhanced distributed channel access (enhanced distributed channel access, EDCA)) of protocols. Therefore, how to schedule time resources to provide a stable transmission latency is worth considering.

## SUMMARY

Embodiments of this application provide a method for scheduling a time resource in a wireless local area network, an apparatus, and a readable storage medium, to resolve latency instability caused by air interface contention, and further reduce signaling overheads and a transmission latency. In this way, spectral efficiency is improved, time resource waste is reduced, and resource utilization is improved.

The following describes embodiments of this application from different aspects. It should be understood that, for implementations and beneficial effects of the following different aspects, reference may be made to each other.

According to a first aspect, an embodiment of this application provides a method for scheduling a time resource in a wireless local area network. The method includes: A first device receives transmission opportunity (transmission opportunity, TXOP) grant information, where the TXOP grant information includes information indicating each TXOP in a reserve period of each service interval in one beacon interval, and a device to which each TXOP is granted. The first device contends for a current TXOP by using a first mode if there is to-be-sent data of a first type in a transmit queue of the first device, and the first device determines, based on the TXOP grant information, that the current TXOP is granted to the first device. Alternatively, the first device contends for the current TXOP by using a second mode if there is the to-be-sent data of the first type in the transmit queue of the first device, and the first device determines, based on the TXOP grant information, that the current TXOP is not granted to the first device.

Duration that corresponds to the first mode and in which a medium (medium) remains idle before sending of a frame is allowed is less than duration that corresponds to the second mode and in which a medium remains idle before sending of a frame is allowed. For example, the first mode is a point coordination function (point coordination function, PCF) mode, and the second mode is a distributed coordination function (distributed coordination function, DCF) mode. In this case, when the first mode is used, the duration in which a medium remains idle before sending of a frame is allowed is a point coordination function inter-frame space (PCF inter-frame space, PIFS). When the second mode is used, the duration in which a medium remains idle before sending of a frame is allowed is a sum of a distributed inter-frame spacing (distributed inter-frame spacing, DIPS) and a slot time (that is, DIFS+slot time), where the slot time may be a number greater than or equal to 0.

It should be understood that, according to the current standard, TXOP duration is a period of time in which a station (the station herein is a station in a broad sense, and refers to an access point or a non-access point station) performs data transmission without interference after obtaining a transmission opportunity. The station that obtains the TXOP may be referred to as a TXOP holder (TXOP holder). The TXOP duration includes duration required for the TXOP holder to transmit one or more pieces of data and a corresponding immediate response frame (the immediate response frame herein may refer to an acknowledgment frame, a block acknowledgment, or the like). The TXOP in this embodiment of this application indicates a reserved or pre-allocated transmission opportunity. Correspondingly, duration of the TXOP or a length of the TXOP indicates a reserved or pre-allocated period. The TXOP in this embodiment of this application may have another name, for example, reserved duration or a reserved slot time resource. This is not limited in this embodiment of this application.

In this embodiment of this application, the to-be-sent data of the first type may be predefined data, and may be data with a highest priority in a device, data with a lowest latency requirement, data requiring a deterministic latency (or a stable latency), or the like. In this embodiment of this application, for example, the to-be-sent data of the first type is data requiring a deterministic latency (or a stable latency). The deterministic latency (deterministic latency) may be understood as a stable message sending latency within a specific range. The message sending latency may refer to a latency from a time at which frame-based data is input at a sending end to a time at which the frame-based data is received and output at a receiving end.

In this solution, when the to-be-sent data of the first type exists in the transmit queue of the first device, after receiving the TXOP grant information, the first device determines, based on the TXOP grant information, a mode used by the first device to contend for the time resource. If the current TXOP is granted to the first device, the first device may preempt the time resource by using the PIFS. If the current TXOP is not granted to the first device, the first device preempts the time resource by using the DIFS. Because a preemption time required by the PITS is shorter than that required by the DIFS, a preemption success probability is higher, that is, the PITS is more efficient than the DIFS. Therefore, it ensured that a STA or an AP using the PITS can preempt a time resource (or a TXOP) granted to the STA or the AP. Therefore, in this solution, latency instability caused by air interface contention can be resolved, that is, a stable latency is provided for the to-be-sent data of the first type.

With reference to the first aspect, in a possible implementation, that the first device contends for the current TXOP by using a second mode if there is the to-be-sent data of the first type in the transmit queue of the first device, and the first device determines, based on the TXOP grant information, that the current TXOP is not granted to the first device includes:

The first device contends for the current TXOP by using a second mode of a first priority if there is the to-be-sent data of the first type in the transmit queue of the first device, the first device determines, based on the TXOP grant information, that the current TXOP is not granted to the first device, and the TXOP grant information includes a TXOP granted to the first device. Alternatively, the first device contends for the current TXOP by using a second mode of a second priority if there is the to-be-sent data of the first type in the transmit queue of the first device, the first device determines, based on the TXOP grant information, that the current TXOP is not granted to the first device, and the TXOP grant information does not include the TXOP granted to the first device.

Duration that corresponds to the second mode of the first priority and in which a medium remains idle before sending of a frame is allowed is less than duration that corresponds to the second mode of the second priority and in which a medium remains idle before sending of a frame is allowed. That is, the first priority is higher than the second priority. In other words, for contention for the TXOP, a probability of obtaining the TXOP by using the second mode of the first priority is higher than a probability of obtaining the TXOP by using the second mode of the second priority. For example, the second mode is the DCF mode. When the second mode is used, duration in which a medium remains idle before sending of a frame is allowed is DIFS+slot time. A slot time corresponding to the second mode of the first priority is 0. To be specific, for the second mode of the first priority, the duration in which a medium remains idle before sending of a frame is allowed is the DIFS. A slot time corresponding to the second mode of the second priority is not 0. To be specific, for the second mode of the second priority, duration in which a medium remains idle before sending of a frame is allowed is DIFS+slot time (not 0).

In this solution, if the current TXOP is not granted to the first device, but the TXOP grant information includes the TXOP granted to the first device, compared with a case in which the TXOP grant information does not include the TXOP granted to the first device, the first device may contend for the time resource by using a manner of a higher priority. This helps a device that has to-be-sent data of the first type to obtain the time resource more quickly and perform sending, thereby further ensuring a stable latency of the to-be-sent data of the first type.

With reference to the first aspect, in a possible implementation, the information indicating each TXOP includes one or more of the following: a start time, duration, and an end time of each TXOP. In this solution, one TXOP is determined based on one or more of a start time, duration, and an end time of the TXOP. This helps the first device contend for time resources in different modes at different times, to provide a stable latency for the to-be-sent data of the first type.

With reference to the first aspect, in a possible implementation, the TXOP grant information further includes one or more of the following: a service interval count in one beacon interval, duration of one service interval, reserve period duration of each service interval, an offset of the first reserve period from a nearest target beacon transmission time (target beacon transmission time, TBTT), a quantity of TXOPs in a reserve period of each service interval, and duration of a guard band. Duration of the guard band may be less than or equal to maximum TXOP duration. To be specific, the duration of the guard band is less than or equal to maximum channel occupancy duration starting from preemption of a channel by a device. The parameter may be specified by the AP.

Optionally, the TXOP grant information may be carried in a beacon (beacon) frame. The TXOP grant information may also be carried in another frame (any advertisement frame other than the beacon frame). This is not limited in embodiments of this application.

With reference to the first aspect, in a possible implementation, duration of each TXOP is a preset value.

With reference to the first aspect, in a possible implementation, the method further includes: The first device sends TXOP application information, where the TXOP application information includes a to-be-transmitted traffic volume in one beacon interval and/or a mean data rate. For example, the TXOP application information includes a mean data rate, or a to-be-transmitted traffic volume in one beacon interval and a mean data rate. The to-be-transmitted traffic volume in one beacon interval and/or the mean data rate are/is used to determine duration of a TXOP granted to the first device in a reserve period of each service interval in the one beacon interval.

In this solution, the first device sends a reserve request (that is, the TXOP application information) to the second device, so that the second device can reserve a time resource (that is, a TXOP) for the first device that requires a stable latency/deterministic latency according to a policy, so that on-demand allocation can be implemented. In this way, time resource waste is reduced and resource utilization is improved.

According to a second aspect, an embodiment of this application provides a method for scheduling a time resource in a wireless local area network. The method includes: A second device (AP) sends transmission opportunity TXOP grant information, where the TXOP grant information includes information indicating each TXOP in a reserve period of each service interval in one beacon interval, and a device to which each TXOP is granted. Optionally, before the second device sends the TXOP grant information, the second device generates the TXOP grant information.

The TXOP in this embodiment of this application indicates a reserved or pre-allocated transmission opportunity. Correspondingly, duration of the TXOP or a length of the TXOP indicates a reserved or pre-allocated period. The TXOP in this embodiment of this application may have another name, for example, reserved duration or a reserved slot time resource. This is not limited in this embodiment of this application.

With reference to the second aspect, in a possible implementation, the second device contends for a current TXOP by using a first mode if there is to-be-sent data of a first type in a transmit queue of the second device, and the second device determines, based on the TXOP grant information, that the current TXOP is granted to the second device. Alternatively, the second device contends for the current TXOP by using a second mode if there is the to-be-sent data of the first type in the transmit queue of the second device, and the second device determines, based on the TXOP grant information, that the current TXOP is not granted to the second device. Duration that corresponds to the first mode and in which a medium remains idle before sending of a frame is allowed is less than duration that corresponds to the second mode and in which a medium remains idle before sending of a frame is allowed. For example, the first mode is a PCF mode, and the second mode is a DCF mode.

In this solution, the second device (AP) may also participate in the manner of time resource scheduling. That is, when the second device has to-be-sent data of a first type, the second device may also determine, based on the TXOP grant information, a mode used by the second device to contend for a time resource, to provide a stable latency or a deterministic latency for the to-be-sent data of the first type.

With reference to the second aspect, in a possible implementation, that the second device contends for the current TXOP by using a second mode if there is the to-be-sent data of the first type in the transmit queue of the second device, and the second device determines, based on the TXOP grant information, that the current TXOP is not granted to the second device includes:

The second device contends for the current TXOP by using a second mode of a first priority if there is the to-be-sent data of the first type in the transmit queue of the second device, the second device determines, based on the TXOP grant information, that the current TXOP is not granted to the second device, and the TXOP grant information includes a TXOP granted to the second device. Alternatively, the second device contends for the current TXOP by using a second mode of a second priority if there is the to-be-sent data of the first type in the transmit queue of the second device, the second device determines, based on the TXOP grant information, that the current TXOP is not granted to the second device, and the TXOP grant information does not include the TXOP granted to the second device.

Duration that corresponds to the second mode of the first priority and in which a medium remains idle before sending of a frame is allowed is less than duration that corresponds to the second mode of the second priority and in which a medium remains idle before sending of a frame is allowed.

With reference to the second aspect, in a possible implementation, the information indicating each TXOP includes one or more of the following: a start time, duration, and an end time of each TXOP.

With reference to the second aspect, in a possible implementation, the TXOP grant information further includes one or more of the following: a service interval count in one beacon interval, duration of one service interval, reserve period duration of each service interval, an offset of the first reserve period from a nearest TBTT, a quantity of TXOPs in a reserve period of each service interval, and duration of a guard band. Duration of the guard band may be less than or equal to maximum TXOP duration. To be specific, the duration of the guard band is less than or equal to maximum channel occupancy duration starting from preemption of a channel by a device. The parameter may be specified by the AP.

Optionally, the TXOP grant information may be carried in a beacon (beacon) frame. The TXOP grant information may also be carried in another frame (any advertisement frame other than the beacon frame). This is not limited in embodiments of this application.

With reference to the second aspect, in a possible implementation, duration of each TXOP is a preset value.

In this solution, the second device (AP) reserves/pre-allocates a period of time (a length of the period of time is fixed) for each specific subscribed device (a device requiring a deterministic latency/stable latency or a device having deterministic-latency traffic/stable-latency traffic), so that the specific device can transmit data requiring a deterministic latency, and notifies, through advertisement, an ambient STA and AP of information about the time reserved/pre-allocated (that is, the TXOP grant information) for each specific device. Latency instability caused by air interface contention can be resolved, and a contention-free polling frame does not need to be sent for polling to determine whether a station has to-be-transmitted data. In this way, signaling overheads and a transmission latency are reduced, and spectral efficiency is improved.

With reference to the second aspect, in a possible implementation, the method further includes: The second device receives TXOP application information sent by the first device, where the TXOP application information includes a to-be-transmitted traffic volume in one beacon interval and/or a mean data rate. The second device determines, based on the TXOP application information, duration of a TXOP granted to the first device in a reserve period of each service interval in the one beacon interval. For example, the TXOP application information includes a mean data rate, or a to-be-transmitted traffic volume in one beacon interval and a mean data rate.

With reference to the second aspect, in a possible implementation, that the second device determines, based on the TXOP application information, duration of a TXOP granted to the first device in a reserve period of each service interval in the one beacon interval includes: The second device determines, based on the TXOP application information, total TXOP duration required by the to-be-transmitted traffic volume in the one beacon interval. The second device allocates the total TXOP duration evenly to the reserve period of each service interval in the one beacon interval, to obtain the duration of the TXOP granted to the first device in the reserve period of each service interval.

According to a third aspect, an embodiment of this application provides a communication apparatus. The communication apparatus may be a first device or a chip in the first device, for example, a Wi-Fi chip. The communication apparatus includes: a transceiver module, configured to receive TXOP grant information, where the TXOP grant information includes information indicating each TXOP in a reserve period of each service interval in one beacon interval, and a device to which each TXOP is granted; and a processing module, configured to contend for a current TXOP by using a first mode if there is to-be-sent data of a first type in a transmit queue of the first device, and the first device determines, based on the TXOP grant information, that the current TXOP is granted to the first device, where the processing module is further configured to contend for the current TXOP by using a second mode if there is the to-be-sent data of the first type in the transmit queue of the first device, and the first device determines, based on the TXOP grant information, that the current TXOP is not granted to the first device. Duration that corresponds to the first mode and in which a medium (medium) remains idle before sending of a frame is allowed is less than duration that corresponds to the second mode and in which a medium remains idle before sending of a frame is allowed.

With reference to the third aspect, in a possible implementation, the processing module is specifically configured to:

contend for the current TXOP by using a second mode of a first priority if there is the to-be-sent data of the first type in the transmit queue of the first device, the first device determines, based on the TXOP grant information, that the current TXOP is not granted to the first device, and the TXOP grant information includes a TXOP granted to the first device; or
contend for the current TXOP by using a second mode of a second priority if there is the to-be-sent data of the first type in the transmit queue of the first device, the first device determines, based on the TXOP grant information, that the current TXOP is not granted to the first device, and the TXOP grant information does not include the TXOP granted to the first device.

Duration that corresponds to the second mode of the first priority and in which a medium remains idle before sending of a frame is allowed is less than duration that corresponds to the second mode of the second priority and in which a medium remains idle before sending of a frame is allowed.

With reference to the third aspect, in a possible implementation, the information indicating each TXOP includes one or more of the following: a start time, duration, and an end time of each TXOP.

With reference to the third aspect, in a possible implementation, the TXOP grant information further includes one or more of the following: a service interval count in one beacon interval, duration of one service interval, reserve period duration of each service interval, an offset of the first reserve period from a nearest TBTT, a quantity of TXOPs in a reserve period of each service interval, and duration of a guard band.

Optionally, the TXOP grant information may be carried in a beacon (beacon) frame. The TXOP grant information may also be carried in another frame (any advertisement frame other than the beacon frame). This is not limited in embodiments of this application.

With reference to the third aspect, in a possible implementation, duration of each TXOP is a preset value.

With reference to the third aspect, in a possible implementation, the transceiver module is further configured to send TXOP application information, where the TXOP application information includes a to-be-transmitted traffic volume in one beacon interval and/or a mean data rate. For example, the TXOP application information includes a mean data rate, or a to-be-transmitted traffic volume in one beacon interval and a mean data rate. The to-be-transmitted traffic volume in one beacon interval and/or the mean data rate are/is used to determine duration of a TXOP granted to the first device in a reserve period of each service interval in the one beacon interval.

According to a fourth aspect, an embodiment of this application provides a communication apparatus. The communication apparatus may be a second device or a chip in the second device, for example, a Wi-Fi chip. The communication apparatus includes a transceiver module, configured to send TXOP grant information, where the TXOP grant information includes information indicating each TXOP in a reserve period of each service interval in one beacon interval, and a device to which each TXOP is granted.

With reference to the fourth aspect, in a possible implementation, the communication apparatus further includes a contention module, configured to: contend for a current TXOP by using a first mode if there is to-be-sent data of a first type in a transmit queue of the second device, and the second device determines, based on the TXOP grant information, that the current TXOP is granted to the second device; or contend for the current TXOP by using a second mode if there is the to-be-sent data of the first type in the transmit queue of the second device, and the second device determines, based on the TXOP grant information, that the current TXOP is not granted to the second device. Duration that corresponds to the first mode and in which a medium remains idle before sending of a frame is allowed is less than duration that corresponds to the second mode and in which a medium remains idle before sending of a frame is allowed.

With reference to the fourth aspect, in a possible implementation, the contention module is specifically configured to:

contend for the current TXOP by using a second mode of a first priority if there is the to-be-sent data of the first type in the transmit queue of the second device, the second device determines, based on the TXOP grant information, that the current TXOP is not granted to the second device, and the TXOP grant information includes a TXOP granted to the second device; or contend for the current TXOP by using a second mode of a second priority if there is the to-be-sent data of the first type in the transmit queue of the second device, the second device determines, based on the TXOP grant information, that the current TXOP is not granted to the second device, and the TXOP grant information does not include the TXOP granted to the second device.

Duration that corresponds to the second mode of the first priority and in which a medium remains idle before sending of a frame is allowed is less than duration that corresponds to the second mode of the second priority and in which a medium remains idle before sending of a frame is allowed.

With reference to the fourth aspect, in a possible implementation, the information indicating each TXOP includes one or more of the following: a start time, duration, and an end time of each TXOP.

With reference to the fourth aspect, in a possible implementation, the TXOP grant information further includes one or more of the following: a service interval count in one beacon interval, duration of one service interval, reserve period duration of each service interval, an offset of the first reserve period from a nearest TBTT, a quantity of TXOPs in a reserve period of each service interval, and duration of a guard band. Duration of the guard band may be less than or equal to maximum TXOP duration. To be specific, the duration of the guard band is less than or equal to maximum channel occupancy duration starting from preemption of a channel by a device. The parameter may be specified by the AP.

Optionally, the TXOP grant information may be carried in a beacon (beacon) frame. The TXOP grant information may also be carried in another frame (any advertisement frame other than the beacon frame). This is not limited in embodiments of this application.

With reference to the fourth aspect, in a possible implementation, duration of each TXOP is a preset value.

With reference to the fourth aspect, in a possible implementation, the communication apparatus further includes a determining module. The transceiver module is configured to receive TXOP application information sent by the first device, where the TXOP application information includes a to-be-transmitted traffic volume in one beacon interval and/or a mean data rate. The determining module is configured to determine, based on the TXOP application information, duration of a TXOP granted to the first device in a reserve period of each service interval in the one beacon interval. For example, the TXOP application information includes a mean data rate, or a to-be-transmitted traffic volume in one beacon interval and a mean data rate.

With reference to the fourth aspect, in a possible implementation, the determining module is specifically configured to: determine, based on the TXOP application information, total TXOP duration required by the to-be-transmitted traffic volume in the one beacon interval; and allocate the total TXOP duration evenly to the reserve period of each service interval in the one beacon interval, to obtain the duration of the TXOP granted to the first device in the reserve period of each service interval.

According to a fifth aspect, an embodiment of this application provides a communication apparatus, specifically a first device, including a processor and a transceiver. The transceiver is configured to receive TXOP grant information, where the TXOP grant information includes information indicating each TXOP in a reserve period of each service interval in one beacon interval, and a device to which each TXOP is granted. The processor is configured to: contend for a current TXOP by using a first mode if there is to-be-sent data of a first type in a transmit queue of the first device, and the first device determines, based on the TXOP grant information, that the current TXOP is granted to the first device; or contend for the current TXOP by using a second mode if there is the to-be-sent data of the first type in the transmit queue of the first device, and the first device determines, based on the TXOP grant information, that the current TXOP is not granted to the first device. Duration that corresponds to the first mode and in which a medium remains idle before sending of a frame is allowed is less than duration that corresponds to the second mode and in which a medium remains idle before sending of a frame is allowed.

Optionally, the communication apparatus further includes a memory, configured to store a computer program, where the computer program includes program instructions.

According to a sixth aspect, an embodiment of this application provides a communication apparatus, specifically a second device, including a processor and a transceiver. The processor is configured to generate TXOP grant information. The transceiver is configured to send the TXOP grant information. The TXOP grant information includes information indicating each TXOP in a reserve period of each service interval in one beacon interval, and a device to which each TXOP is granted.

Optionally, the communication apparatus further includes a memory, configured to store a computer program, where the computer program includes program instructions.

According to a seventh aspect, an embodiment of this application provides a communication apparatus. The communication apparatus is implemented in a form of a chip product, and includes a processor and an interface circuit. The interface circuit is configured to receive code instructions and transmit the code instructions to the processor. The processor is configured to run the code instructions to perform the method for scheduling a time resource in a wireless local area network according to any one of the first aspect or the possible implementations of the first aspect. Optionally, the communication apparatus further includes a memory, and the memory is connected to the processor by a circuit. Optionally, the processor and the memory may be physically independent units, or the memory and the processor may be integrated.

According to an eighth aspect, an embodiment of this application provides a communication apparatus. The communication apparatus is implemented in a form of a chip product, and includes a processor and an interface circuit. The interface circuit is configured to receive code instructions and transmit the code instructions to the processor. The processor is configured to run the code instructions to perform the method for scheduling a time resource in a wireless local area network according to any one of the second aspect or the possible implementations of the second aspect.

According to a ninth aspect, an embodiment of this application provides a computer-readable storage medium, where the computer-readable storage medium stores a computer program. The computer program includes program instructions. When the program instructions are run on a computer, the computer is enabled to perform the method for scheduling a time resource in a wireless local area network according to the first aspect or the second aspect.

According to a tenth aspect, an embodiment of this application further provides a computer program product. When the computer program product runs on a computer, the computer is enabled to perform the method for scheduling a time resource in a wireless local area network according to the first aspect or the second aspect.

According to an eleventh aspect, an embodiment of this application provides a communication system. The communication system includes the first device described in the first aspect or the third aspect, and the second device described in the second aspect or the fourth aspect.

In this embodiment of this application, latency instability caused by air interface contention can be resolved. In addition, signaling overheads and a transmission latency can be reduced, spectral efficiency can be improved, time resource waste can be reduced, and resource utilization can be improved.

**BRIEF DESCRIPTION OF DRAWINGS**

To describe technical solutions in embodiments of this application more clearly, the following briefly describes accompanying drawings used to describe embodiments.

FIG. 1 is a schematic diagram of an architecture of a wireless communication system according to an embodiment of this application;

FIG. 2a is a schematic diagram of a structure of an access point according to an embodiment of this application;

FIG. 2b is a schematic diagram of a structure of a station according to an embodiment of this application;

FIG. 3 is a schematic diagram of a coexistence relationship between a PCF and a DCF according to an embodiment of this application;

FIG. 4 is a schematic diagram of a scenario of home Wi-Fi networking according to an embodiment of this application;

FIG. 5 is a schematic flowchart of a method for scheduling a time resource in a wireless local area network according to an embodiment of this application;

FIG. 6 is a schematic diagram of a frame format of a TXOP grant table element according to an embodiment of this application;

FIG. 7 is a schematic diagram of a frame format of a reserve period record field according to an embodiment of this application;

FIG. 8 is a schematic diagram of a frame format of a deterministic traffic element according to an embodiment of this application;

FIG. 9 is a schematic diagram of TXOP grant information in a service interval according to an embodiment of this application;

FIG. 10 is a schematic diagram of a time sequence for contention corresponding to a case in which there is deterministic-latency data in a STA 1 according to an embodiment of this application;

FIG. 11 is a schematic diagram of a time sequence for contention corresponding to a case in which there is no deterministic-latency data in a STA 1 according to an embodiment of this application;

FIG. 12 is a schematic diagram of a time sequence for contention corresponding to a case in which the STA 1 completes sending of deterministic-latency data in advance according to an embodiment of this application;

FIG. 13 is a schematic diagram of a time sequence for contention in a non-reserve period according to an embodiment of this application;

FIG. 14 is a schematic diagram of a structure of a communication apparatus 1 according to an embodiment of this application;

FIG. 15 is a schematic diagram of a structure of a communication apparatus 2 according to an embodiment of this application; and

FIG. 16 is a schematic diagram of a structure of a communication apparatus 1000 according to an embodiment of this application.

## DESCRIPTION OF EMBODIMENTS

The technical solutions according to embodiments of this application are clearly and completely described in the following with reference to accompanying drawings.

In the descriptions of this application, unless otherwise specified, "/" means "or". For example, A/B may represent A or B. The term "and/or" in this application describes only an association relationship between associated objects and represents that three relationships may exist. For example, A and/or B may represent the following three cases: Only A exists, both A and B exist, and only B exists. In addition, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, and c each may be singular or plural.

In the descriptions of this application, the terms such as "first" and "second" are used to distinguish between different objects, but do not limit a quantity and an execution sequence. The terms such as "first" and "second" do not indicate a definite difference. In addition, the terms "include", "have", and any variant thereof are intended to cover non-exclusive inclusion. For example, a process, a method, a system, a product, a device, or the like that includes a series of steps or units is not limited to listed steps or units, but optionally further includes an unlisted step, unit, or the like, or optionally further includes another inherent step or unit of the process, the method, the product, the device, or the like.

In this application, the word "example", "for example", or the like is used to give an example, an illustration, or a description. Any embodiment or design scheme described as "example" or "for example" in this application should not be explained as being more preferred or having more advantages than another embodiment or design scheme. Specifically, use of "example" or "for example" is intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

In addition, the terms "system" and "network" in this specification are often used interchangeably.

It should be further understood that determining B based on A does not mean that B is determined only based on A, and B may be alternatively determined based on A and/or other information.

The technical solutions provided in embodiments of this application may be applied to various communication systems, for example, a system that uses an 802.11 standard. For example, the 802.11 standards include but are not limited to the 802.11a/b/g/n/ac/ax standard, the 802.11e standard, the 802.11be standard, or a next-generation 802.11 standard. A scenario to which the technical solutions in embodiments of this application are applicable includes communication between an access point (access point, AP) and one or more stations (stations, STAs).

In embodiments of this application, the term "communication" may also be described as "data transmission", "information transmission", or "transmission". The term "transmission" may generally refer to sending and receiving.

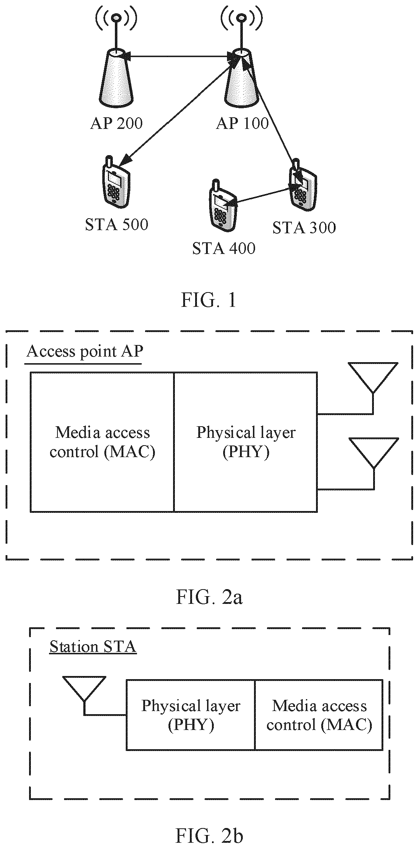

Refer to FIG. 1. FIG. 1 is a schematic diagram of an architecture of a wireless communication system according to an embodiment of this application. As shown in FIG. 1, the wireless communication system may include one or more APs (for example, an AP 100 and an AP 200 in FIG. 1) and one or more STAs (for example, a STA 300, a STA 400, and a STA 500 in FIG. 1). Both the AP and the STA support a WLAN communication protocol. The communication protocol may include 802.11be (or referred to as Wi-Fi 7, the extremely high throughput (extremely high throughput, EHT) protocol), and may further include protocols such as 802.11ax and 802.11ac. With continuous evolution and development of communication technologies, the communication protocol may further include a protocol like a next-generation protocol of 802.11be. A WLAN is used as an example. An apparatus for implementing a method in embodiments of this application may be an AP or a STA in the WLAN, or a chip or a processing system installed in the AP or the STA.

Optionally, the access point (for example, the AP 100 or the AP 200 in FIG. 1) in embodiments of this application is an apparatus having a wireless communication function, supports communication according to a wireless local area network (wireless local area network, WLAN) protocol, and has a function of communicating with another device (for example, a station or another access point) in a WLAN, and may further have a function of communicating with another device. In a WLAN system, an access point may be referred to as an access point station (access point station, AP STA). The apparatus having a wireless communication function may be an entire device, or may be a chip, a processing system, or the like installed in the entire device. The device in which the chip or the processing system is installed may implement a method and function in embodiments of this application under control of the chip or the processing system. The AP in embodiments of this application is an apparatus providing a service for the STA, and may support the 802.11 protocols. For example, the AP may be a communication entity like a communication server, a router, a switch, or a bridge. The AP may include a macro base station, a micro base station, a relay station, or the like in various forms. The AP may alternatively be a chip and a processing system in these devices in various forms, to implement the method and function in embodiments of this application.

Optionally, a station (for example, the STA 300, the STA 400, or the STA 500 in FIG. 1) in embodiments of this application is an apparatus having a wireless communication function, supports communication according to a WLAN protocol, and has a capability of communicating with another station or an access point in a WLAN network. In the WLAN system, a station may be referred to as a non-access point station (non-access point station, non-AP STA). For example, the STA is any user communication device that allows a user to communicate with an AP to implement communication with a WLAN.

The apparatus having a wireless communication function may be an entire device, or may be a chip, a processing system, or the like installed in the entire device. The device in which the chip or the processing system is installed may implement a method and function in embodiments of this application under control of the chip or the processing system. For example, the STA may be user equipment that can access the Internet, like a tablet computer, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone, an Internet of Things node in the Internet of Things, an in-vehicle communication apparatus in the Internet of Vehicles, an entertainment device, a gaming device or system, a global positioning system device, or the like. The STA may alternatively be a chip or a processing system in the foregoing terminals.

The WLAN system can provide high-speed and low-latency transmission. With evolution of WLAN application scenarios, the WLAN system will be applied to more scenarios or industries, for example, the Internet of Things industry, the Internet of Vehicles industry, a banking industry, an enterprise, a stadium exhibition hall, a concert hall, a hotel room, a dormitory, a ward, a classroom, a shopping mall, a square, a street, a workshop, and a warehouse. A device supporting WLAN communication (for example, an access point or a station) may be a sensor node (for example, a smart water meter, a smart power meter, or a smart air detection node) in a smart city, a smart device (for example, a smart camera, a projector, a display, a television, a sound box, a refrigerator, or a washing machine) in a smart home, a node in the Internet of Things, an entertainment terminal (for example, a wearable device like an augmented reality (augmented reality, AR) device or a virtual reality (virtual reality, VR) device), an intelligent device in a smart office (for example, a printer, a projector, a speaker, or a sound box), an Internet of Vehicles device in the Internet of Vehicles, equipment in a daily life scenario (for example, a vending machine, a self-service navigation console in a shopping mall or supermarket, a self-service cashier, or a self-service ordering machine), equipment in large sports and music venues, and the like. Specific forms of a STA, an AP, and an MLD are not limited in embodiments of this application, and are merely examples for description herein.

It should be understood that the 802.11 standards focus on a physical layer (physical layer, PHY) and a medium access control (medium access control, MAC) layer. For example, refer to FIG. 2a. FIG. 2a is a schematic diagram of a structure of an access point according to an embodiment of this application. The AP may be a multi-antenna/multi-radio frequency AP, or may be a single-antenna/single-radio frequency AP. An antenna/radio frequency part is used to send/receive a data packet (a data packet in this specification may also be referred to as a physical layer protocol data unit (PHY protocol data unit, PPDU)). In an implementation, the antenna or the radio frequency part of the AP may be separated from a main body of the AP. In this case, a separation and remote architecture is formed. In FIG. 2a, the AP may include a physical layer processing circuit and a medium access control processing circuit. The physical layer processing circuit may be configured to process a physical layer signal. The MAC layer processing circuit may be configured to process a MAC layer signal. For another example, refer to FIG. 2b. FIG. 2b is a schematic diagram of a structure of a station according to an embodiment of this application. FIG. 2b is a schematic diagram of a structure of a single-antenna/single-radio frequency STA. In an actual scenario, the STA may alternatively be a multi-antenna/multi-radio frequency STA, and may be a device with more than two antennas. An antenna/radio frequency part is used to send/receive a data packet. In an implementation, the antenna or the radio frequency part of the STA may be separated from a main body of the STA. In this case, a separation and remote architecture is formed. In FIG. 2b, the STA may include a PHY processing circuit and a MAC processing circuit. The physical layer processing circuit may be configured to process a physical layer signal. The MAC layer processing circuit may be configured to process a MAC layer signal.

In some embodiments, the AP in the wireless communication system shown in FIG. 1 may be replaced with an access point multi-link device (AP multi-link device, AP MLD), and the STA may be replaced with a non-access point multi-link device (non-AP multi-link device, non-AP MLD). In other words, the technical solutions provided in embodiments of this application may also be applied to a scenario in which multi-link devices (multi-link devices, MLDs) communicate with each other. The multi-link device is a wireless communication device that supports parallel transmission on a plurality of links. Compared with a device that supports transmission on only a single link, transmission efficiency and a throughput of the multi-link device are higher. The multi-link device includes one or more affiliated stations STAs (affiliated STAs), and the affiliated STAs are logical stations and may work on one link. The affiliated station may be an access point (access point, AP) or a non-access point station (non-access point station, non-AP STA). A multi-link device whose affiliated station is an AP may be referred to as an AP MLD, and a multi-link device whose affiliated station is a non-AP STA may be referred to as a non-AP MLD.

Optionally, the multi-link device (which may be a non-AP MLD or an AP MLD herein) in embodiments of this application is an apparatus having a wireless communication function. The apparatus may be an entire device, or may be a chip, a processing system, or the like installed in the entire device. The device in which the chip or the processing system is installed may implement a method and function in embodiments of this application under control of the chip or the processing system.

The foregoing briefly describes the system architecture in embodiments of this application. To better understand technical solutions provided in embodiments of this application, the following briefly describes a point coordination function (point coordination function, PCF) defined in the 802.11e standard.

Before sending data, a device in a Wi-Fi network needs to perform air interface collision detection or channel contention, for example, CSMA/CA or EDCA. The device is allowed to send data only when it is detected that a channel remains idle (idle) for a period of time. When it is detected that the channel is busy (busy), a value of a backoff counter needs to be reset and a backoff is performed. In this case, a device having to-be-sent data may quickly preempt a channel for data transmission, or cannot preempt a channel in a long time. Consequently, a data transmission latency is unstable. In addition, after transmitting only a part of to-be-sent data, the device may further need to perform air interface collision detection or channel contention again to transmit a remaining part of the to-be-sent data. For example, if a transmission length of the to-be-sent data exceeds maximum duration (that is, TXOP limit) of a transmission opportunity (transmission opportunity, TXOP), the device needs to perform air interface collision detection or channel contention again to transmit a remaining part of the to-be-sent data. In this case, a time at which a channel is obtained through re-contention is unstable. Consequently, a data transmission latency is unstable.

To resolve latency uncertainty caused by an air interface collision detection mechanism of the Wi-Fi network, based on long term evolution (long term evolution, LTE) of a cellular network, the 802.11e standard introduces a reserve mechanism under centralized control. This mechanism is defined as the point coordination function (point coordination function, PCF). In an 802.11 MAC layer protocol structure, the PCF is a protocol based on a distributed coordination function (distributed coordination function, DCF). A main principle is as follows. An AP acts as a point coordinator (point coordinator, PC), and polls nodes connected to the AP (namely, pollable stations, CF-Pollable STAs) in sequence according to an internal polling list (polling list), to check whether the nodes have to-be-transmitted data. The polling list may be pre-allocated for the AP, and may include station addresses for polling. In a contention-free period (contention-free period, CFP), a node cannot proactively contend for a channel because of a network allocation vector (network allocation vector, NAV) mechanism. Therefore, in the contention-free period, the node cannot proactively transmit data until the PC polls the node and requires the node to feed back data. The stations for the PCF may be classified into pollable stations (CF-Pollable STAs) and non-pollable stations (Non-CF-Pollable STAs). A station capable of replying to contention-free polling (that is, polling by the point coordinator in the contention-free period) is referred to as a pollable (CF-Pollable) station, and a station incapable of replying to contention-free polling is referred to as a non-pollable (Non-CF-Pollable) station. Alternatively, a node that supports the PCF mechanism is referred to as a pollable station (CF-Pollable STA), and a node that does not support the PCF mechanism is referred to as a non-pollable station (Non-CF-Pollable STA).

It may be understood that the station may maintain and update the NAV. The NAV may be understood as a countdown timer that gradually decreases as time goes. When countdown is 0, it is considered that a medium (medium) is in an idle state. In this case, contention may start. Specifically, after a station receives a frame, if a receiving address field in the frame does not indicate an address of the station, it indicates that the station is a non-receiving station, and the station may update the NAV based on a duration (duration) field in the received frame. If the receiving address field in the frame indicates the address of the station, it indicates that the station is a receiving station, and the station cannot update the NAV. It should be understood that the duration field may be used to notify a non-receiving station of duration in which a channel is occupied, to prevent another non-receiving station from accessing the channel for data transmission. Before the NAV is updated, it may be further determined whether a value of the duration field in a current frame is greater than a current NAV value of the station. If the value is greater than the current NAV value of the station, the NAV is updated; otherwise, if the value is less than or equal to the current NAV value of the station, the NAV is not updated. A value of the NAV is a value corresponding to a moment at which the received frame is received. For more information about the NAV mechanism, refer to the conventional technology. Details are not described in embodiments of this application.

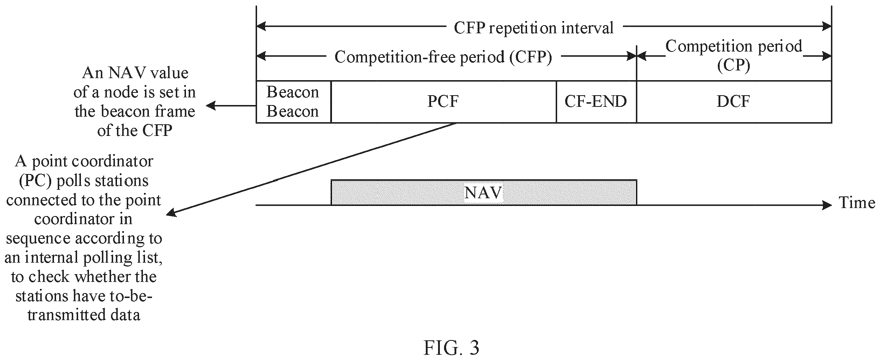

FIG. 3 is a schematic diagram of a coexistence relationship between a PCF and a DCF according to an embodiment of this application. As shown in FIG. 3, a CFP repetition interval may include a contention-free period (CFP) and a contention period (CP). In the contention-free period, a PCF mechanism is used for data transmission. In the contention period, a DCF mechanism is used for channel contention. In the contention-free period, a PC (a point coordinator, generally, an AP) indicates an ambient STA to start a PCF silent mode by sending a beacon (beacon) frame. This is because the beacon frame carries a duration field. The duration field is used by a non-receiving station to set an NAV of the station to a value indicated by the duration field. When the NAV is not 0, the non-receiving station does not perform contention (that is, does not send a frame to probe whether a channel is idle). Then, the PC sends a contention-free end (CF-END) frame to indicate the ambient STA to end the PCF silent mode. Herein, the PCF silent mode may refer to a case in which the ambient STA does not proactively contend for a channel. In the contention-free period (CFP) shown in FIG. 3, the AP (which serves as the point coordinator herein) may sequentially send a contention-free polling (CF-poll) frame to the STAs connected to the AP according to a sequence (for example, an ascending order) of the polling list to perform polling. After receiving the CF-poll frame, if there is to-be-transmitted data, the STA feeds back the to-be-transmitted data to the AP. In other words, during the contention-free period, the station cannot proactively transmit data unless the AP makes a request with a polling frame. However, in the contention period, all stations contend for a channel to obtain a transmission opportunity for data transmission.

In conclusion, in the PCF mechanism, a contention-free polling (CF-poll) frame is used to trigger the STA in the polling list to transmit data. If the STA does not need to transmit data currently, a time resource is wasted. In addition, because a CF-poll frame is used to trigger each STA in the polling list to send data, signaling overheads are large, and a latency is long.

Therefore, embodiments of this application provide a method for scheduling a time resource in a wireless local area network, to resolve latency instability caused by air interface contention, and further reduce signaling overheads and a transmission latency. In this way, spectral efficiency is improved, time resource waste is reduced, and resource utilization is improved.

In this application, unless otherwise specified, for same or similar parts in embodiments or implementations, reference may be made to each other. In embodiments of this application and implementations in embodiments, unless otherwise specified or a logical conflict occurs, terms and/or descriptions in different embodiments and implementations in embodiments are consistent and may be mutually referenced. Technical features in the different embodiments and implementations in embodiments may be combined to form a new embodiment or implementation based on an internal logical relationship thereof. The following implementations of this application are not intended to limit the protection scope of this application.

The following describes technical solutions in embodiments of this application in detail with reference to specific scenarios.

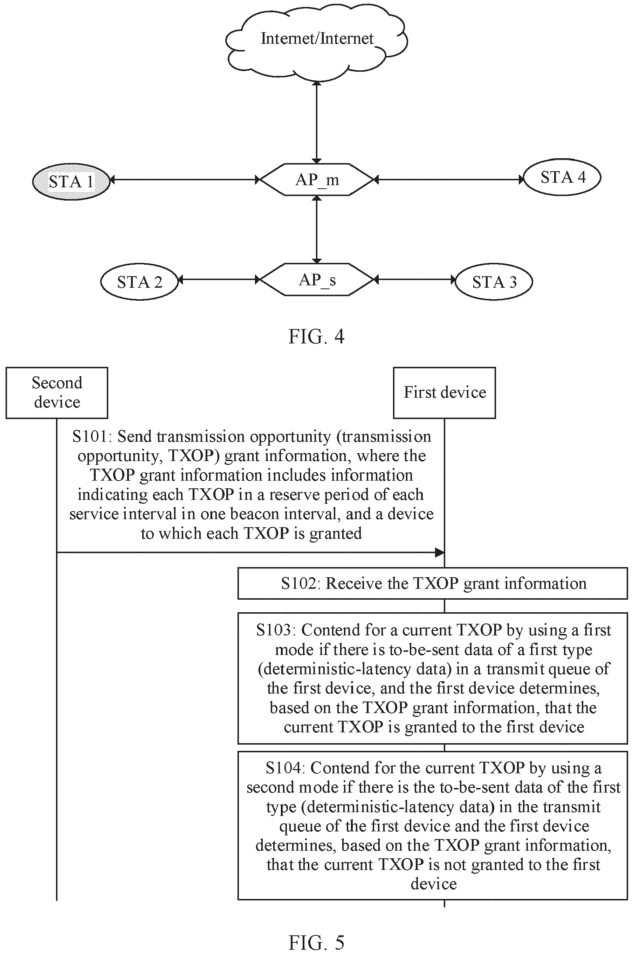

Home Wi-Fi is used as an example. Refer to FIG. 4. FIG. 4 is a schematic diagram of a scenario of home Wi-Fi networking according to an embodiment of this application. As shown in FIG. 4, a STA 1 and a STA 4 access an AP_m, that is, the STA 1 and the STA 4 may access an external network (for example, the Internet (Internet)) through the AP_m. A STA 2 and a STA 3 access an AP_s. The AP_s may communicate with the AP_m. In this case, the STA 2 and the STA 3 may access the external network through the AP_s and the AP_m. Because STAs 1 to 4 in home Wi-Fi networking communicate with the AP through a Wi-Fi network, both uplink data sent by the STAs 1 to 4 to the AP and downlink data sent by the AP to the STAs 1 to 4 occupy time resources of an unlicensed spectrum (for example, a 2.4G spectrum or a 5G spectrum). For example, a stable latency/deterministic latency is required for communication between the STA 1 and the AP_m. The AP_m may reserve a time resource for the STA 1, to ensure that when the STA 1 has to-be-sent data, a time resource of a Wi-Fi air interface can be used by the STA 1. In this case, the STA 2 to the STA 4 may proactively avoid contention with the STA 1. In this way, it can be ensured that a transmission latency of the STA 1 stays stable without contention of another station.

The deterministic latency (deterministic latency) may be understood as a stable message sending latency within a specific range. The message sending latency may refer to a latency from a time at which frame-based data is input at a sending end to a time at which the frame-based data is received and output at a receiving end. For example, in a scenario in which a user plays a game with a terminal device, when there is no interference, a Wi-Fi transmission latency of the terminal device needs to remain at about 10 ms (millisecond) (for example, among data packets sent by the terminal device in a gaming scenario, when a proportion of data packets whose Wi-Fi transmission latencies exceed 10 ms is less than 1%, it indicates that a Wi-Fi transmission latency remains at about 10 ms (millisecond)). That is, in a gaming scenario, a Wi-Fi transmission latency of a data packet remains at about 10 ms, and needs to be stable and deterministic. Therefore, in a scenario in which to-be-transmitted data requires a deterministic latency, a stable or deterministic latency of data transmission can be ensured by using the method provided in embodiments of this application.

In embodiments of this application, "data requiring a deterministic latency" or "data requiring a stable latency" is referred to as "deterministic-latency data". Details are not described below again.

Optionally, a first device in embodiments of this application may be a STA (single link) or an AP (single link), for example, the AP 200, the STA 300, or the STA 500 shown in FIG. 1, or the STA 1 or the AP_s shown in FIG. 4. The first device may alternatively be a non-AP MLD. The second device in embodiments of this application may be an AP (single link), for example, the AP 100 shown in FIG. 1 or the AP_m shown in FIG. 4. The second device may alternatively be an AP MLD. Both the first device and the second device in embodiments of this application support the 802.11be protocol (or referred to as Wi-Fi 7 or the EHT protocol), and may further support another WLAN communication protocol like 802.11ax or 802.11ac. It should be understood that the first device and the second device in embodiments of this application may further support a future 802.11 protocol, for example, Wi-Fi 8 and Wi-Fi 9. In other words, the method provided in embodiments of this application is not only applicable to the 802.11be protocol, but also applicable to the future 802.11 protocol.

Refer to FIG. 5. FIG. 5 is a schematic flowchart of a method for scheduling a time resource in a wireless local area network according to an embodiment of this application. As shown in FIG. 5, the method for scheduling a time resource in a wireless local area network includes but is not limited to the following steps.

S101: A second device sends transmission opportunity (transmission opportunity, TXOP) grant information, where the TXOP grant information includes information indicating each TXOP in a reserve period of each service interval in one beacon interval and a device to which each TXOP is granted.

It should be understood that, according to the current standard, TXOP duration is a period of time in which a station (the station herein is a station in a broad sense, and refers to an access point or a non-access point station) performs data transmission without interference after obtaining a transmission opportunity. The station that obtains the TXOP may be referred to as a TXOP holder (TXOP holder). The TXOP duration includes duration required for the TXOP holder to transmit one or more pieces of data and a corresponding immediate response frame (the immediate response frame herein may refer to an acknowledgment frame, a block acknowledgment, or the like). The TXOP in this embodiment of this application indicates a reserved or pre-allocated transmission opportunity. Correspondingly, duration of the TXOP or a length of the TXOP indicates a reserved or pre-allocated period. The TXOP in this embodiment of this application may have another name, for example, reserved duration or a reserved slot time resource. This is not limited in this embodiment of this application.

In this embodiment of this application, one beacon interval (beacon interval) includes one or more service intervals (service intervals, SIs), and one service interval includes one reserve period (reserve period, RP) and one non-reserve period (non-reserve period). One reserve period includes one or more TXOPs. One TXOP includes one or more time slot times (slot times). After network configuration is completed, a length of the slot time is fixed.

In an implementation, the second device (for example, the AP_m shown in FIG. 4) may reserve a time of a fixed length for each specific subscribed device, to transmit to-be-sent data of a first type. In this embodiment of this application, the to-be-sent data of the first type is deterministic-latency data. A specific device in embodiments of this application may be a device requiring a deterministic latency/stable latency, or may be a device having deterministic-latency traffic/stable-latency traffic. To be specific, the second device may reserve one TXOP for each specific subscribed device in a reserve period (reserve period, RP) of each service interval (service interval, SI) in a beacon interval (beacon interval), where duration of the TXOP is a preset value. "Preset" in embodiments of this application may be understood as "set", "set in advance", "predefine", "store", "pre-store", "pre-negotiate", "pre-configure", "solidify", or "pre-burn". A start time of each TXOP is determined by the second device according to a policy of the second device. In terms of time, a plurality of TXOPs do not overlap. The plurality of TXOPs may be continuous or discontinuous. The second device may periodically advertise the TXOP grant information. The TXOP grant information includes information indicating each TXOP in a reserve period of each service interval in one beacon interval, and a device to which each TXOP is granted. The information indicating each TXOP may be: a start time and duration of each TXOP, or an end time and duration of each TXOP, or a start time and an end time of each TXOP, or a start time, an end time, and duration of each TXOP. For example, duration (duration) of all TXOPs in the TXOP grant information is the same and is a preset value. Optionally, when the duration (duration) of the TXOPs is the same, if both a first device and the second device can learn the duration of the TXOP, the information indicating the TXOP may have only a start time or an end time.

Optionally, the TXOP grant information may further include one or more of the following: a service interval count in one beacon interval, duration of one service interval, reserve period duration of each service interval, an offset of the first reserve period from a nearest target beacon transmission time (target beacon transmission time, TBTT), a quantity of TXOPs in the reserve period of each service interval, and duration of a guard band (guard band, GB). Duration of the guard band may be less than or equal to maximum TXOP duration. To be specific, the duration of the guard band is less than or equal to maximum channel occupancy duration starting from preemption of a channel by a device. The parameter may be specified by the AP.

Optionally, the TXOP grant information may be carried in a beacon frame. The TXOP grant information may also be carried in another frame (any advertisement frame other than the beacon frame). This is not limited in embodiments of this application. For example, the TXOP grant information may be carried in a newly defined information element (information element, IE) of the beacon frame, and the newly defined information element (IE) may be referred to as a TXOP grant table element, a TXOP reserve element, or the like. A name of the newly defined information element (IE) is not limited in this embodiment of this application. For ease of description, the information element (IE) carrying the TXOP grant information is referred to as a TXOP grant table element in the following.

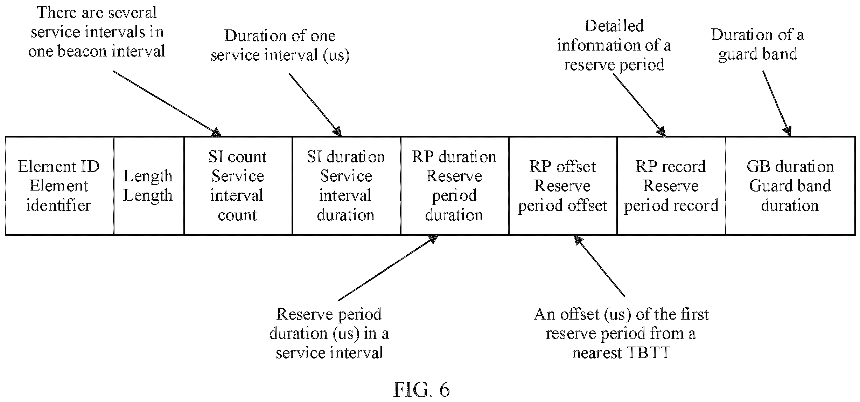

Refer to FIG. 6. FIG. 6 is a schematic diagram of a frame format of a TXOP grant table element according to an embodiment of this application. As shown in FIG. 6, the TXOP grant table element (carrying TXOP grant information) includes but is not limited to the following fields: an element identifier (element ID) field, a length (length) field, a service interval count (SI count) field, a service interval duration (SI duration) field, a reserve period duration (RP duration) field, a reserve period offset (RP offset) field, a reserve period record (RP record) field, and a guard band duration (GB duration) field. The service interval count (SI count) field may be used to indicate a service interval count in one beacon interval, in other words, indicate a service interval count in one beacon interval. The service interval duration (SI duration) field may indicate duration of a service interval, and a unit may be microsecond (us). The reserve period duration (RP duration) field may indicate duration of a reserve period in a service interval, and a unit may be us. Because a reserve period duration of each service interval is equal, the RP duration field may also be understood as a field indicating the reserve period duration of each service interval. The reserve period offset (RP offset) field may indicate an offset of the first reserve period from a nearest TBTT, and a unit may be us. A guard band duration (GB duration) field may indicate duration of a guard band, and a unit may be us. The guard band duration field is set to maximum TXOP duration. The reserve period record (RP record) field may indicate detailed information of a reserve period, or indicate information about a TXOP in a reserve period.

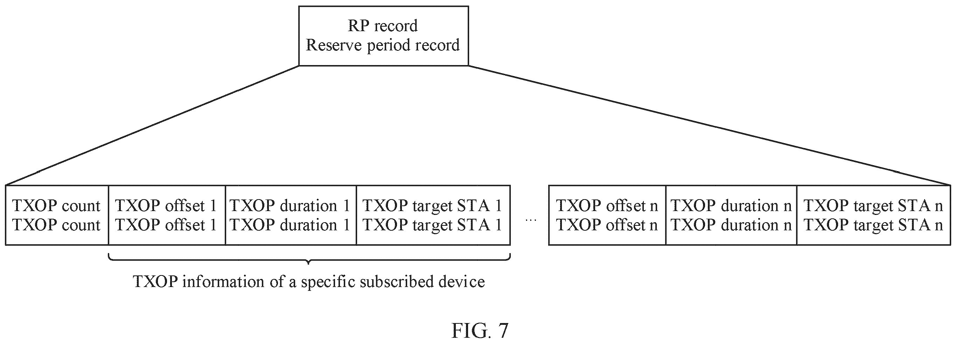

Refer to FIG. 7. FIG. 7 is a schematic diagram of a frame format of a reserve period record field according to an embodiment of this application. The reserve period record (RP record) field includes TXOP information of one or more specific subscribed devices (which may be STAs or APs herein). As shown in FIG. 7, the reserve period record (RP record) field includes but is not limited to the following subfields: a TXOP count (TXOP count) subfield, a TXOP offset (TXOP offset) subfield, a TXOP duration (TXOP duration) subfield, and a TXOP target STA (TXOP target STA) subfield. The TXOP count subfield may indicate a quantity of TXOPs in a reserve period, in other words, a quantity of TXOPs in a reserve period of each service interval. Because one TXOP is granted to one specific subscribed device, the TXOP count subfield may also indicate a quantity of specific subscribed devices, or indicate a quantity of pieces of TXOP information of specific subscribed devices. A TXOP offset n (TXOP offset n) subfield may indicate an offset (in a unit of us) of the $n^{th}$ TXOP from a nearest TBTT, that is, indicate a start time of the $n^{th}$ TXOP. The TXOP duration n (TXOP duration n) subfield may indicate duration (in a unit of us) of the $n^{th}$ TXOP. A TXOP target STA n (TXOP target STA n) subfield may indicate a device to which the $n^{th}$ TXOP is granted. In the foregoing descriptions, n is a positive integer, a value of n is 1, 2, 3, ..., X, and X is equal to a value indicated by the TXOP count subfield. The TXOP target STA subfield may be set to an address, for example, a MAC address, of a device to which a TXOP is granted; or may be set to an identifier of a device, for example, an association identifier (association identifier, AID); or may be other information that can uniquely identify a device. For example, if a TXOP count subfield indicates three TXOPs, there are three TXOP offset subfields, three TXOP duration subfields, and three TXOP target STA subfields in an RP record field. One TXOP offset subfield, one TXOP duration subfield, and one TXOP target STA subfield together indicate TXOP information of a specific subscribed device.

It should be understood that names and a sequence of the fields/subfields in FIG. 6 and FIG. 7 are merely examples. Names and a sequence of the fields/subfields are not limited in embodiments of this application.

In this embodiment of this application, the second device reserves/pre-allocates a period of time (a length of the period of time is fixed) for each specific subscribed device, so that the specific device can transmit data requiring a deterministic latency, and notifies, through advertisement, an ambient STA and AP of information about the time reserved/pre-allocated (that is, the TXOP grant information) for each specific device. Latency instability caused by air interface contention can be resolved, and a CF-Poll frame does not need to be sent for polling to determine whether a station has to-be-transmitted data. In this way, signaling overheads and a transmission latency are reduced, and spectral efficiency is improved.

In another implementation, after the first device (for example, the STA 1 or the AP_s shown in FIG. 4) accesses the second device (for example, the AP_m shown in FIG. 4), for example, after the first device is successfully associated with the second device, the first device may send TXOP application information to the second device. The TXOP application information may be used to request the second device to reserve a time resource for the first device. The TXOP application information may include a mean data rate (mean data rate). Optionally, the TXOP application information further includes a traffic (traffic) volume (or a message volume) to be transmitted in one beacon interval (beacon interval). After receiving the TXOP application information, the second device may determine whether the first device is eligible for applying for a TXOP. For example, the second device determines, based on subscription information, whether the first device is a specific subscribed device. If the first device is the specific subscribed device, the first device is eligible for applying for a TXOP; otherwise, if the first device is not the specific subscribed device, the first device is not eligible for applying for a TXOP.

If the second device determines that the first device is eligible for applying for a TXOP, the second device may update the TXOP grant information. It should be understood that initial TXOP grant information may be empty, that is, the initial TXOP grant information may not include a reserve period, or duration of the reserve period is 0. A manner in which the second device updates the TXOP grant information is as follows. The second device determines, based on the traffic volume and the mean data rate that are carried in the TXOP application information, duration (duration) of a TXOP granted to the first device in a reserve period (reserve period) of each service interval (service interval, SI) in one beacon interval. Specifically, the second device may determine, based on the traffic volume and the mean data rate that are carried in the TXOP application information, total TXOP duration for the to-be-transmitted traffic volume in the beacon interval. Then the second device may evenly allocate the total TXOP duration to the reserve period of each service interval in the beacon interval, to obtain the duration of the TXOP granted to the first device in the reserve period of each service interval. A specific allocation algorithm is not limited in this embodiment of this application. The second device may further determine, according to a policy of the second device, a start time and/or an end time of the TXOP granted to the first device in the reserve period (reserve period) of each service interval. For example, the start time of the TXOP is the first slot time in the reserve period, or a slot time in the middle, or the j$^{th}$ slot time to last, where j is a positive integer. After determining at least two of the duration, the start time, and the end time of the TXOP granted to the first device in the reserve period of each service interval, the second device may send response information for the TXOP application information to the first device, where the response information includes the TXOP grant information. The TXOP grant information includes information (for example, at least two of a start time, duration, and an end time of each TXOP) indicating each TXOP in a reserve period of each service interval in one beacon interval, and a device to which each TXOP is granted. The TXOPs may be consecutive or may be inconsecutive. The plurality of TXOPs do not overlap in time. For example, the TXOP grant information includes duration and a start time of a TXOP granted to the first device in a reserve period of each service interval in one beacon interval, and information used to identify the first device. In other words, the response information is used to accept a TXOP application of the first device. The information used to identify the first device may be an address of the first device, for example, a MAC address; or may be an identifier of the first device, for example, an association identifier (association identifier, AID); or may be other information that can uniquely identify the first device.

For example, the second device may calculate, according to the following formula (1-1), total TXOP duration for a to-be-transmitted traffic volume in one beacon interval.

$$TXOP = \max\left(\frac{N * L}{R} + O, \frac{M}{R} + O\right) \qquad (1\text{-}1)$$

In the foregoing formula (1-1), TXOP represents total TXOP duration for a to-be-transmitted traffic volume in one beacon interval, N represents a quantity of packets sent by the first device, L represents a medium access control service data unit (MAC service data unit, MSDU) size (MSDU size), R represents a physical transmission rate (physical transmission rate), O represents overheads (overheads) of an acknowledge (acknowledge, ACK) frame, M represents a maximum allowable size of MSDU (maximum allowable size of MSDU), and max() represents maximum value calculation. The value of N meets the following formula (1-2).

$$N = \frac{SI * P}{L} \quad (1\text{-}2)$$

In the foregoing formula (1-2), SI represents a scheduled service interval (scheduled service interval), and P represents a mean data rate (mean data rate). A to-be-transmitted traffic volume in one beacon interval carried in the TXOP application information may be used to calibrate a mean data rate. For example, a mean data rate carried in the TXOP application information may be calibrated based on a quotient obtained by dividing a to-be-transmitted traffic volume in one beacon interval by one beacon interval (which is assumed to be 100 ms), to obtain P.

If the second device determines that the first device is not eligible for applying for a TXOP, the second device may send response information for the TXOP application information to the first device, where the response information is used to reject a TXOP application of the first device. Optionally, the response information may include the TXOP grant information, and the TXOP grant information includes a start time and duration of each TXOP in a reserve period of each service interval in one beacon interval, and a device to which each TXOP is granted. The TXOP grant information herein does not include the TXOP granted to the first device.

Optionally, the TXOP application information sent by the first device to the second device may be located in an add traffic stream (add traffic stream, ADDTS) request (ADDTS request) frame. The TXOP application information may alternatively be located in another frame. This is not limited in embodiments of this application. For example, an information element (IE) may be obtained through extension in the ADDTS request frame, and the information element (IE) obtained through extension may be referred to as a deterministic traffic (deterministic traffic) element, or the information element obtained through extension may have another name. This is not limited in embodiments of this application. The TXOP application information may be located in the deterministic traffic element. Correspondingly, the response information returned by the second device to the first device may be located in an ADDTS response (ADDTS response) frame, in other words, the TXOP grant information may be located in the ADDTS response frame. For example, an information element (IE), for example, a TXOP grant table element, may be obtained through extension in the ADDTS response frame. The TXOP grant information may be located in the TXOP grant table element. For an implementation of the TXOP grant information, refer to the foregoing descriptions. Details are not described herein again.

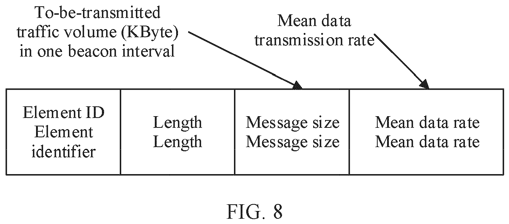

For example, refer to FIG. 8. FIG. 8 is a schematic diagram of a frame format of a deterministic traffic element according to an embodiment of this application. As shown in FIG. 8, the deterministic traffic element (carrying TXOP application information) includes but is not limited to the following fields: an element identifier (element ID) field, a length (length) field, a message size (message size) field, and a mean data rate (mean data rate) field. The message size (message size) field may indicate a to-be-transmitted traffic (traffic) volume in one beacon interval or a to-be-transmitted message volume in one beacon interval. A unit of the traffic volume/message volume is kilobytes (KBytes). The mean data rate (mean data rate) field may indicate a mean data transmission rate. It should be understood that names and a sequence of the fields in FIG. 8 are merely examples. Names and a sequence of the fields are not limited in embodiments of this application.

Optionally, when a beacon interval (beacon interval) arrives, the second device may use a beacon frame to carry latest TXOP grant information and perform advertisement, so that an ambient STA and AP can obtain the TXOP grant information. In this case, the second device does not need to perform polling to determine whether the ambient STA and AP have to-be-transmitted data requiring a deterministic latency. In this way, signaling overheads and a transmission latency are reduced, and spectral efficiency is improved.

For example, the scenario shown in FIG. 4 is used as an example. It is assumed that the first device is the STA 1, and the second device is the AP_m. The STA 1 sends TXOP application information to AP_m to apply for a reserve time resource. The AP_m determines whether to approve the application based on a configured policy and current time resource usage. If the application is approved, the AP_m refreshes the TXOP grant information, and then notifies the STA 1 through a unicast message (ADDTS response), and notifies all ambient APs and STAs through an advertisement message (beacon). It should be understood that, the AP_m notifies the STA 1 through the unicast message (ADDTS response), so that the STA 1 can learn in time a manner in which the STA 1 performs contention. In this way, a case in which the STA 1 misses a TXOP that is allocated by the AP_m to the STA 1 and that closely follows the ADDTS response can be avoided.

In this embodiment of this application, the second device reserves, based on a reserve request (that is, the TXOP application information) of the first device and a policy, a time resource (that is, a TXOP) for the first device that requires a stable latency/deterministic latency, so that on-demand allocation can be implemented. Therefore, there is no need to reserve/pre-allocate a time resource for every specific subscribed device. In this way, time resource waste is reduced, and resource utilization is improved.

The foregoing two implementations may be combined. For example, if the second device does not receive TXOP application information sent by any specific subscribed device when the beacon interval arrives, the second device may reserve one TXOP for every specific subscribed device in a reserve period of each service interval in one beacon interval (the beacon interval may be a current beacon interval, or may be a next beacon interval), where duration of the TXOP is a preset value; and advertise information about the TXOP carried in a beacon frame. In other words, if the second device does not receive TXOP application information sent by any specific subscribed device when the beacon interval arrives, the second device uses a beacon frame to carry information about a TXOP (like a start time of the TXOP, duration of the TXOP, and a device to which the TXOP is granted) reserved for every specific subscribed device and performs advertisement. When the second device receives TXOP application information sent by a specific subscribed device, the second device may update the TXOP grant information. When a next beacon interval arrives, the second device uses a beacon frame to carry latest TXOP grant information and performs advertisement. Specifically, the second device may update information about a TXOP (for example, a start time and duration of the TXOP) granted to the specific device in the TXOP grant information. For a specific update manner, refer to the foregoing descriptions. Details are not described herein again. If update of the information about the TXOP granted to the specific device causes update of information about a TXOP granted to another specific device, the information of the TXOP granted to the another specific device also needs to be updated. For example, a specific device A sends TXOP application information to the second device. The second device updates, based on the TXOP application information, duration of a TXOP granted to the specific device A. It is assumed that an updated TXOP granted to the specific device A overlaps with a TXOP granted to the specific device B in terms of time. In this case, the second device further needs to update a start time of the TXOP granted to the specific device B, so that the updated TXOP granted to the specific device A does not overlap with the TXOP granted to the specific device B in terms of time.

S 102: The first device receives the TXOP grant information.

S 103: The first device contends for a current TXOP by using a first mode if there is to-be-sent data of a first type (deterministic-latency data) in a transmit queue of the first device, and the first device determines, based on the TXOP grant information, that the current TXOP is granted to the first device.

S104: The first device contends for the current TXOP by using a second mode if there is the to-be-sent data of the first type (deterministic-latency data) in the transmit queue of the first device, and the first device determines, based on the TXOP grant information, that the current TXOP is not granted to the first device.

Optionally, after receiving the TXOP grant information, the first device can determine whether there is to-be-sent data in the transmit queue of the first device. If there is the to-be-sent data in the transmit queue, whether the to-be-sent data is to-be-sent data of the first type (that is, deterministic-latency data) may be determined. For example, it is assumed that data generated by a game application is deterministic-latency data. When determining that the game data generated by the game application is in the transmit queue of the first device, the first device may mark the game data, or place the game data in a special transmit queue of transmit queues to wait for sending, where the special transmit queue is used to store the deterministic-latency data. The TXOP grant information includes information (for example, a start time and duration of each TXOP) indicating each TXOP in a reserve period of each service interval in one beacon interval, and a device to which each TXOP is granted. If the to-be-sent data is to-be-sent data of the first type (deterministic-latency data), the first device can determine, based on the TXOP grant information, whether the current TXOP (that is, a TXOP in which a current moment is located) is granted to the first device. The TXOP in which the current moment is located may be understood as a TXOP including the current moment.

If it is determined, based on the TXOP grant information, that the current TXOP (that is, the TXOP in which the current moment is located) is granted to the first device, the first device may use the first mode to contend for the TXOP, that is, use the first mode to contend for the TXOP in which the current moment is located, in other words, use the first mode to contend for a current slot time (this is because one TXOP includes one or more slot times). To be specific, the first device may contend for the current TXOP by using the first mode if there is the deterministic-latency data in the transmit queue of the first device and the current TXOP (that is, the TXOP in which the current moment is located) is granted to the first device. If it is determined, based on the TXOP grant information, that the current TXOP (that is, the TXOP in which the current moment is located) is not granted to the first device, the first device may use a second mode to contend for the TXOP, that is, use the second mode to contend for the TXOP in which the current moment is located, in other words, use the second mode to contend for the current slot time. To be specific, the first device may contend for the current TXOP by using the second mode if there is the deterministic-latency data in the transmit queue of the first device and the current TXOP (that is, the TXOP in which the current moment is located) is not granted to the first device.

Duration that corresponds to the first mode and in which a medium remains idle before sending of a frame is allowed is less than duration that corresponds to the second mode and in which a medium remains idle before sending of a frame is allowed. In other words, for contention for the TXOP, a probability of obtaining the TXOP by using the first mode is higher than a probability of obtaining the TXOP by using the second mode. For example, the first mode is a point coordination function (PCF) mode, and the second mode is a distributed coordination function (DCF) mode. In this case, when the first mode is used, duration in which a medium remains idle before sending of a frame is allowed is a point coordination function inter-frame space (PCF inter-frame space, PIFS). When the second mode is used, duration in which a medium remains idle before sending of a frame is allowed is a sum of a distributed inter-frame spacing (distributed inter-frame spacing, DIPS) and a slot time (that is, DIFS+slot time), where the slot time may be a number greater than or equal to 0. It should be understood that, PIFS=SIFS+slot time, DIFS=SIFS+(2*slot time)=PIFS+slot time, and SIFS is a short interframe space (short interframe space).

In other words, when there is deterministic-latency data in the transmit queue of the first device, after receiving the TXOP grant information, the first device detects whether the current TXOP is granted to the first device. If the current TXOP is granted to the first device, the first device may contend for the time resource by using the point coordination function inter-frame space (PCF inter-frame space, PIFS). If the current TXOP is not granted to the first device, the first device contends for the time resource by using a distributed inter-frame spacing (distributed inter-frame spacing, DIPS). Because a preemption time required by the PIFS is shorter than that required by the DIFS, a preemption success probability is higher, that is, the PIFS is more efficient than the DIFS. Therefore, it ensured that a STA or an AP using the PIFS can preempt a time resource (or a TXOP) granted to the STA or the AP. Therefore, in embodiments of this application, a stable latency may be provided for deterministic-latency data.

Optionally, when there is the to-be-sent data of the first type (deterministic-latency data) in the transmit queue of the first device, if it is determined, based on the TXOP grant information, that the current TXOP (that is, the TXOP in which the current moment is located) is not granted to the first device, the first device may further determine whether there is a TXOP granted to the first device in the TXOP grant information. If the TXOP grant information includes the TXOP granted to the first device, the first device may contend for the current TXOP (that is, the TXOP in which the current moment is located) by using a second mode of a first priority, in other words, contend for the current slot time by using the second mode of the first priority. In other words, if there is the deterministic-latency data in the transmit queue of the first device, the current TXOP (that is, the TXOP in which the current moment is located) is not granted to the first device, and the TXOP grant information includes the TXOP granted to the first device, the first device may contend for the current TXOP by using the second mode of the first priority. If the TXOP grant information does not include the TXOP granted to the first device, the first device may contend for the current TXOP (that is, the TXOP in which the current moment is located) by using a second mode of a second priority, in other words, contend for the current slot time by using the second mode of the second priority. In other words, if there is the deterministic-latency data in the transmit queue of the first device, the current TXOP (that is, the TXOP in which the current moment is located) is not granted to the first device, and the TXOP grant information does not include the TXOP granted to the first device, the first device may contend for the current TXOP by using the second mode of the second priority. Duration that corresponds to the second mode of the first priority and in which a medium remains idle before sending of a frame is allowed is less than duration that corresponds to the second mode of the second priority and in which a medium remains idle before sending of a frame is allowed. That is, the first priority is higher than the second priority. In other words, for contention for the TXOP, a probability of obtaining the TXOP by using the second mode of the first priority is higher than a probability of obtaining the TXOP by using the second mode of the second priority. For example, the second mode is the DCF mode. When the second mode is used, duration in which a medium remains idle before sending of a frame is allowed is DIFS+slot time. A slot time corresponding to the second mode of the first priority is 0. To be specific, for the second mode of the first priority, the duration in which a medium remains idle before sending of a frame is allowed is the DIFS. A slot time corresponding to the second mode of the second priority is not 0. To be specific, for the second mode of the second priority, duration in which a medium remains idle before sending of a frame is allowed is DIFS+slot time (not 0).

Optionally, if there is no to-be-sent data in the transmit queue, the first device may not participate in contention, and may store the TXOP grant information. When there is to-be-sent data in the transmit queue of the first device, the first device determines whether the to-be-sent data is to-be-sent data of the first type (that is, deterministic-latency data), to determine a next operation. The first device may contend for the current TXOP (that is, a TXOP in which the current moment is located) or the current slot time by using the second mode if there is to-be-sent data in the transmit queue and the to-be-sent data is not deterministic-latency data. Alternatively, the first device may contend for the current TXOP or the current slot time by using the second mode of the second priority if there is to-be-sent data in the transmit queue and the to-be-sent data is not deterministic-latency data.

In other words, when there is no to-be-sent data in the transmit queue of the first device, the first device does not participate in contention regardless of whether the current TXOP is granted to the first device. When there is to-be-sent data in the transmit queue of the first device but the to-be-sent data is not deterministic-latency data (to-be-sent data of the first type), even if the current TXOP is granted to the first device, the first device does not contend for a time resource by using the PIFS, but equally contends for a time resource by using the DIFS as another device that needs to send data (a device that needs to send data besides the first device) (because the another device determines that the current TXOP is not granted to the another device). Therefore, according to embodiments of this application, time resource waste is reduced, and resource utilization is improved.

The following uses several examples to describe a policy of contending for a current TXOP by the first device based on received TXOP grant information.

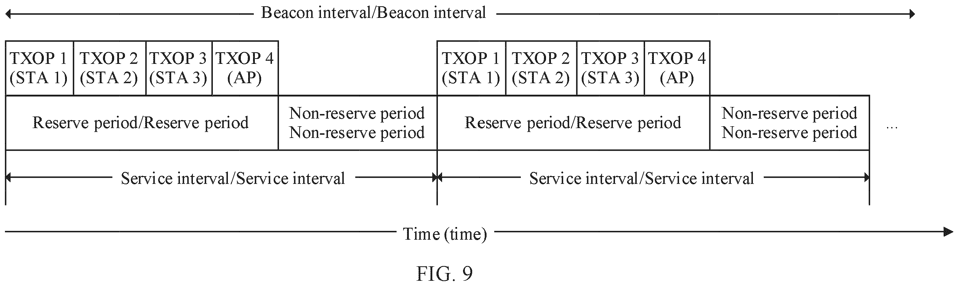

Refer to FIG. 9. FIG. 9 is a schematic diagram of TXOP grant information in a service interval according to an embodiment of this application. Specifically, FIG. 9 shows TXOPs in two service intervals (service intervals) and a device to which each TXOP is granted. As shown in FIG. 9, one service interval includes one reserve period (reserve period) and one non-reserve period (non-reserve period). The reserve period of one service interval includes four reserved/pre-allocated TXOPs: a TXOP 1, a TXOP 2, a TXOP 3, and a TXOP 4. Lengths of some of the four TXOPs may be equal or not equal, or lengths of all of the TXOPs are equal. This is not limited in this embodiment of this application. A device to which the TXOP 1 is granted is a STA 1. A device to which the TXOP 2 is granted is a STA 1. A device to which the TXOP 3 is granted is a STA 3. A device to which the TXOP 4 is granted is an AP. Optionally, there may be guard bands (guard bands, GBs) between the TXOPs. In other words, there may be a guard band between the TXOP 1 and the TXOP 2. There may be a guard band between the TXOP 2 and the TXOP 3. There may be a guard band between the TXOP 3 and the TXOP 4. For brevity of description, FIG. 9 does not show the guard bands between the TXOPs. However, it should be understood that, in actual application, there may be guard bands between the TXOPs. It should be understood that, the guard bands are set between the TXOPs, so that after the TXOP ends, that is, in the guard band, another station has an opportunity for equally contending for a channel and transmitting data.

The TXOP grant information shown in FIG. 9 is used as an example in the following Example 1 to Example 3. In the following examples 1 to 3, an example in which the first device is the STA 1 is used. It should be understood that FIG. 9 is merely an example, and the quantity of service intervals and a quantity of TXOPs shown in FIG. 9 are merely examples. A quantity of service intervals included in one beacon interval and a quantity of TXOPs included in one service interval are not limited in this embodiment of this application.

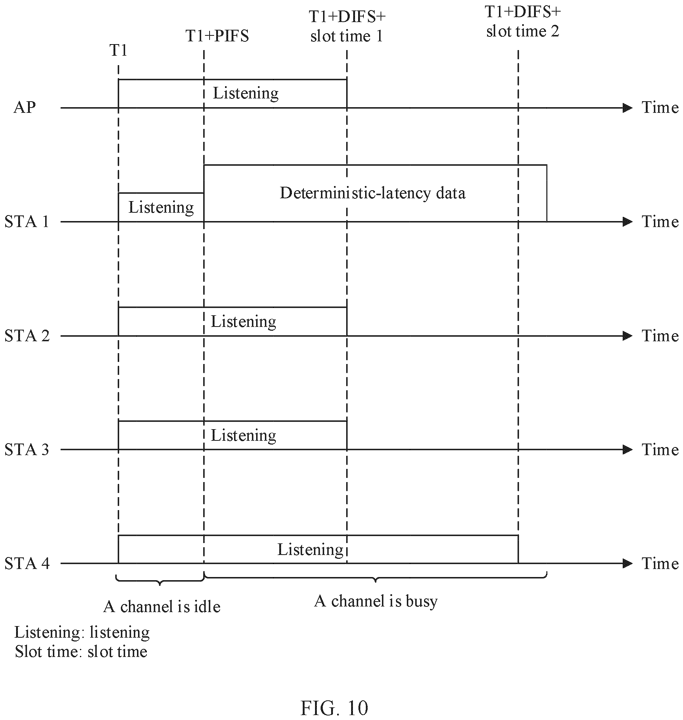

Example 1: A TXOP in which a current moment T1 is located is a TXOP 1. There is deterministic-latency data in a transmit queue of the STA 1 at the current moment. Refer to FIG. 10. FIG. 10 is a schematic diagram of a time sequence for contention corresponding to a case in which there is deterministic-latency data in the STA 1 according to an embodiment of this application. As shown in FIG. 10, the TXOP in which the current moment T1 is located is the TXOP 1, the TXOP 1 is granted to the device STA 1, and there is deterministic-latency data in a transmit queue of the STA 1 at this time. In this case, the STA 1 uses a PCF mode to contend for a time resource at the moment T1. In other words, the STA 1 starts listening to a channel at the moment T1. If it is detected that carrier energy on the channel is less than a threshold, it is considered that a medium or the channel is idle at this time. It should be understood that, for how to specifically determine, by listening to a channel, whether a medium or a channel is idle, refer to descriptions in an existing standard. Details are not described in this embodiment of this application. If the medium (or the channel) remains idle from the moment T1 to a moment T1+PIFS, the STA 1 starts to send the deterministic-latency data at the moment T1+PIFS. For deterministic-latency data of the STA 2, the STA3, and the AP, a DCF mode of a high priority may be used in the TXOP 1 for time resource contention. For non-deterministic-latency data (also referred to as common latency data) of the STA 2, the STA 3, and the AP, a DCF mode of a low priority may be used in the TXOP 1 for time resource contention. That is, for the deterministic-latency data of the STA 2, the STA 3, and the AP, sending is allowed only when it is detected through listening that the medium (or the channel) remains idle from the moment T1 to a moment T1+DIFS+slot time 1. For the common latency data of the STA 2, the STA 3, and the AP, sending is allowed only when it is detected through listening that the medium (or the channel) remains idle from the moment T1 to a moment T1+DIFS+slot time 2. The slot time 1 is less than the slot time 2. For example, the slot time 1 is 0, and the slot time 2 is not 0. In addition, for a STA 4 that has only common latency data in a transmit queue, the STA 4 may contend for a time resource by using a DCF mode of a low priority at the moment T1.

In other words, for a reserved/pre-allocated TXOP, only a STA or an AP to which the TXOP is granted can contend for the TXOP by using the PIFS, and another STA or AP that needs to send data can perform contention only by using the DIFS+slot time. In this case, the STA or AP to which the TXOP is granted can preempt a time resource to send data. In this way, a stable latency can be provided for the deterministic-latency data, and it can also be ensured that there is an opportunity for sending other data.

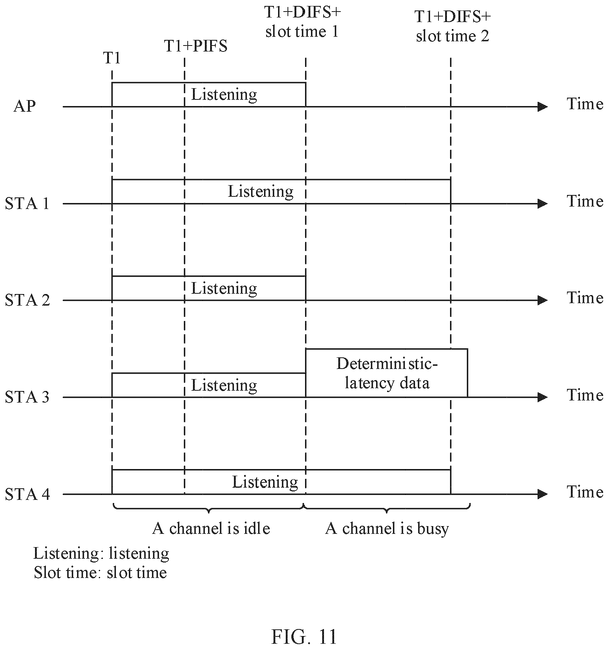

Example 2: A TXOP in which a current moment T1 is located is a TXOP 1. There is no deterministic-latency data in a transmit queue of the STA 1 at the current moment, but there is to-be-sent data (that is, common latency data). Refer to FIG. 11. FIG. 11 is a schematic diagram of time sequence for contention corresponding to a case in which there is no deterministic-latency data in the STA 1 according to an embodiment of this application. As shown in FIG. 11, the TXOP in which the current moment T1 is located is the TXOP 1, the TXOP 1 is granted to the device STA 1, but there is no deterministic-latency data in a transmit queue of the STA 1 at this time. In this case, the STA 1 does not use a PCF mode for contention at the moment T1, but uses a DCF mode of a low priority for contention. In other words, the STA 1 starts continuous listening to a channel at the moment T1. If it is detected that carrier energy on the channel is less than a threshold, it is considered that a medium or the channel is idle at this time. If the medium (or the channel) remains idle from the moment T1 to a moment T1+DIFS+slot time 2, the STA 1 is allowed to send the common latency data. For deterministic-latency data of the STA 2, the STA 3, and the AP, a DCF mode of a high priority may be used in the TXOP 1 for fair time resource contention. For common latency data of the STA 2, the STA 3, and the AP, a DCF mode of a low priority may be used in the TXOP 1 for time resource contention. In addition, for a STA 4 that has only common latency data in a transmit queue, the STA 4 may contend for a time resource by using a DCF mode of a low priority in the TXOP 1. As shown in FIG. 11, it is assumed that the STA 3 obtains a time resource through contention at a moment T1+DIFS+slot time 1. Then the STA 3 may send the deterministic-latency data of the STA 3.

In other words, for a reserved/pre-allocated TXOP, when a STA or an AP to which the TXOP is granted has no deterministic-latency data, the STA or the AP to which the TXOP is granted does not perform contention by using the PIFS. In this case, another STA or AP that needs to send data may preempt a time resource by using DIFS+slot time to send the data. In this way, time resource waste can be reduced, and time resource utilization can be improved.

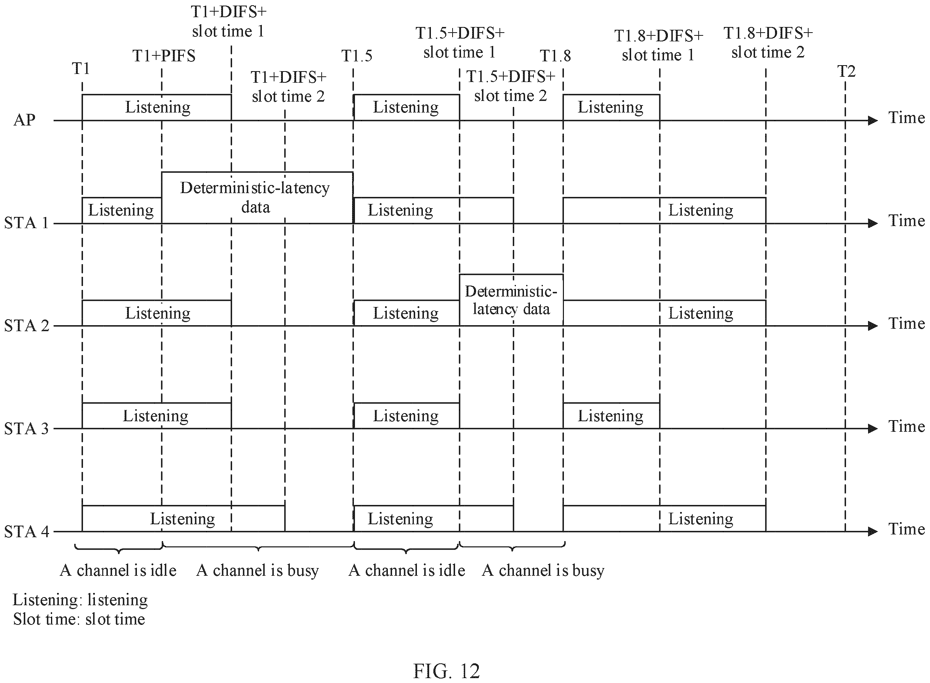

Example 3: A TXOP in which a current moment T1 is located is a TXOP 1. There is deterministic-latency data in a transmit queue of the STA 1 at the current moment, but the deterministic-latency data of the STA 1 is sent in advance. Refer to FIG. 12. FIG. 12 is a schematic diagram of a time sequence for contention corresponding to a case in which the STA 1 completes sending of deterministic-latency data in advance according to an embodiment of this application. It is assumed that the TXOP 1 is from a T1 moment to a T2 moment. As shown in FIG. 12, the TXOP in which the current moment T1 is located is the TXOP 1, the TXOP 1 is granted to the device STA 1, and there is deterministic-latency data in a transmit queue of the STA 1 at this time. In this case, the STA 1 obtains a time resource at the moment T1 through contention by using a PCF mode, the STA 1 sends the deterministic-latency data, and ends sending at a moment T 1.5. In this case, when there is deterministic-latency data in transmit queues of the STA 2, the STA3, and the AP, after the moment T1.5, the STA 2, the STA 3, and the AP may equally contend for a time resource by using a DCF mode of a high priority. It is assumed that the STA 2 obtains a time resource through contention at a moment T1.5+DIFS+slot time 1. Then the STA 2 may send the deterministic-latency data of the STA 2. The STA 2 ends sending at a moment T1.8. In this case, there is still the deterministic-latency data in the transmit queues of the STA 3 and the AP, and then the STA 3 and the AP may equally contend for a time resource by using a DCF mode of a high priority. It should be understood that, for common latency data in the STA 1 to STA 4 and the AP, a DCF mode of a low priority is used at any moment for time resource contention. In the example shown in FIG. 12, because there is only common latency data in the transmit queue of the STA 4, the STA 4 contends for a time resource by using a DCF mode of a low priority at any moment.

In other words, for a reserved/pre-allocated TXOP, when a STA or an AP to which the TXOP is granted completes sending of deterministic-latency data in advance (that is, a time for transmitting the deterministic-latency data is less than the TXOP, or the TXOP is not used up), another STA or AP that needs to send data may quickly preempt, by using DIFS+slot time, a remaining time resource of the TXOP to send data. In this way, a stable latency can be provided for the deterministic-latency data, and it can also be ensured that there is an opportunity for sending other data. In some implementations, another STA or AP that needs to send data may determine, by determining whether a value of a NAV of the STA or the AP is equal to 0, whether the STA or AP to which the TXOP is granted completes sending of data and ends occupation of a channel. If the NAV value is equal to 0, it indicates that the STA or the AP to which the TXOP is granted completes sending of the data and ends occupation of the channel.

It should be understood that, for a conventional device (which may be understood as a device that does not support the technical solutions provided in embodiments of this application herein), according to an existing standard, the conventional device contends for a time resource by using the DIFS. In this case, if a STA or an AP to which a TXOP is granted has to-be-sent deterministic-latency data, a conventional device cannot preempt the TXOP. Therefore, even if there is a conventional device in a network, transmission of the deterministic-latency data is not affected. In other words, in a reserve period, the conventional device does not affect transmission of the deterministic-latency data; in the non-reserve period, all STAs or APs use the DCF mode to equally contend for time resources.

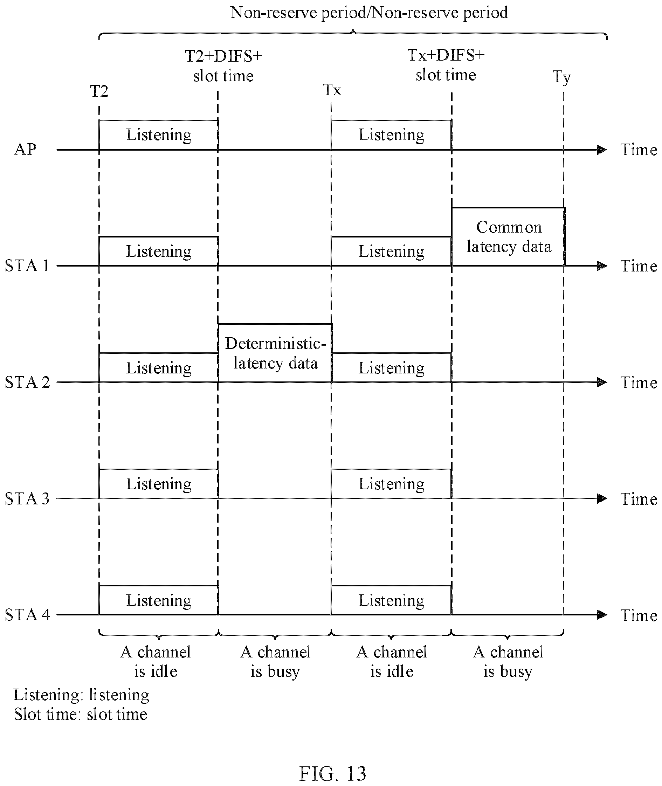

For example, refer to FIG. 13. FIG. 13 is a schematic diagram of a time sequence for contention in a non-reserve period according to an embodiment of this application. As shown in FIG. 13, it is assumed that the non-reserve period starts from a moment T2, the STA 1 to the STA 4 and the AP perform fair contention by using a DCF mode. If the STA 2 obtains a time resource through contention at a moment T2+DIFS+slot time, the STA 2 may start to send deterministic-latency data at the moment T2+DIFS+slot time, and end sending at a moment Tx. After the moment Tx, another device performs contention by using the DCF mode. It is assumed that the STA 1 obtains a time resource through contention at a moment Tx+DIFS+slot time, the STA 1 starts to send common latency data at the moment Tx+DIFS+slot time, and ends sending at a moment Ty. After the Ty moment, another device performs contention by using the DCF mode. The rest can be deduced by analogy.

Optionally, similar to the foregoing operation of contending for the current TXOP by the first device, the second device may also participate in scheduling based on whether the current TXOP is granted to the second device. Specifically, after step S101, the second device may determine whether there is to-be-sent data in a transmit queue of the second device. If there is to-be-sent data in the transmit queue of the second device, whether the to-be-sent data is to-be-sent data of the first type (deterministic-latency data) may be determined. If there is no to-be-sent data in the transmit queue of the second device, the second device may not participate in contention. When there is to-be-sent data in the transmit queue of the second device, the second device determines whether the to-be-sent data is to-be-sent data of the first type (deterministic-latency data), to determine a next operation. The first device may contend for the current TXOP by using the second mode if the to-be-sent data is not to-be-sent data of the first type (deterministic-latency data). If the to-be-sent data is to-be-sent data of the first type (deterministic-latency data), the second device can determine, based on the TXOP grant information stored in the second device, whether the current TXOP (that is, the TXOP in which the current moment is located) is granted to the second device. The second device may contend for the current TXOP by using the first mode if it is determined, based on the TXOP grant information, that the current TXOP is granted to the second device. The second device may contend for the current TXOP by using the second mode if it is determined, based on the TXOP grant information, that the current TXOP is not granted to the second device. For example, if it is determined, based on the TXOP grant information, that the current TXOP is not granted to the second device, the second device may determine whether the TXOP grant information includes a TXOP granted to the second device. The second device may contend for the current TXOP by using the second mode of the first priority if the TXOP grant information includes the TXOP granted to the second device. The second device may contend for the current TXOP by using the second mode of the second priority if the TXOP grant information does not include the TXOP granted to the second device.

In some embodiments of this application, the second device (the AP) may notify an ambient STA or AP of the TXOP grant information through advertisement, so that the ambient STA or AP contends for a time resource based on the TXOP grant information. This can reduce additional channel overheads for the second device to drive the STA/AP to send data. In other words, a CF-Poll frame does not need to be sent for polling to determine whether a station has to-be-transmitted data, thereby improving a Wi-Fi throughput. For a STA/AP to which the current TXOP is granted, if there is deterministic-latency data in a transmit queue of the STA/AP, the PCF mode is used for preemption. Another STA/AP performs equal contention by using the DCF mode. Therefore, the STA/AP to which the current TXOP is granted preempts a time resource for data transmission, and a stable latency can be provided for the deterministic-latency data while it is ensured that there is a transmission opportunity for non-deterministic-latency data. However, for the STA/AP to which the current TXOP is granted, if there is no deterministic-latency data in the transmit queue of the STA/AP, the STA/AP does not use the PCF mode for preemption. In this case, another STA/AP that needs to send data preempts a time resource by using the DCF mode and sends data. In this way, time resource waste is reduced, and resource utilization is improved.

The foregoing content describes in detail the method provided in embodiments of this application. To facilitate implementation of the foregoing solutions in embodiments of this application, embodiments of this application further provide a corresponding apparatus or device.

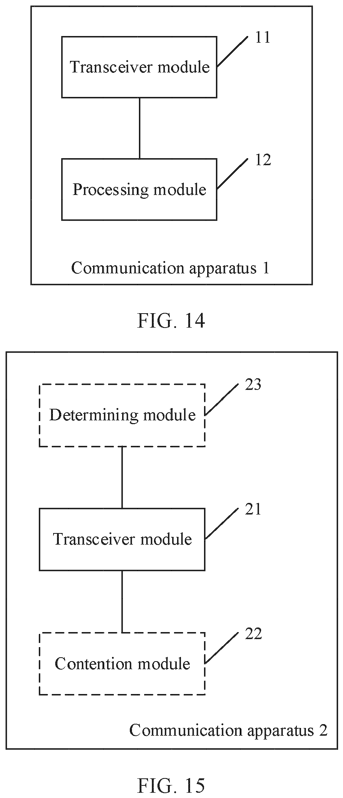

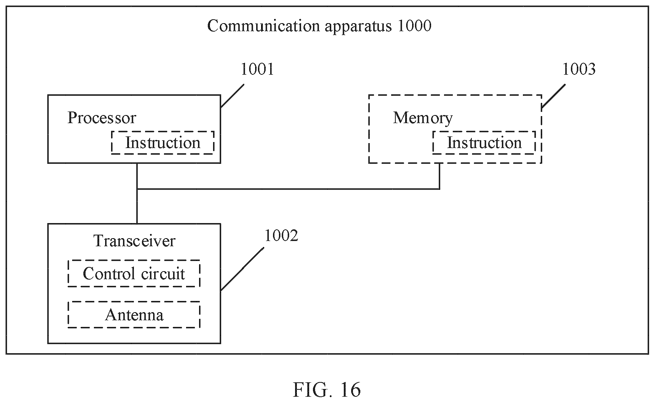

In this embodiment of this application, functional module division may be performed on the first device and the second device based on the foregoing method example. For example, division of the functional modules may be based on respective functions, or two or more functions may be integrated in one processing module. The integrated module may be implemented in a form of hardware, or may be implemented in a form of a software functional module. It should be noted that, in embodiments of this application, module division is an example, and is merely logical function division. In actual implementation, another division manner may be used. The following describes in detail a communication apparatus in embodiments of this application with reference to FIG. 14 and FIG. 16. The communication apparatus is a first device or a second device. Further, the communication apparatus may be an apparatus in the first device. Alternatively, the communication apparatus is an apparatus in the second device.

In a case in which an integrated unit is used, FIG. 14 is a schematic diagram of a structure of a communication apparatus 1 according to an embodiment of this application. The communication apparatus 1 may be the first device or a chip in the first device, for example, a Wi-Fi chip. As shown in the FIG. 14, the communication apparatus 1 may include a transceiver module 11 and a processing module 12.

The transceiver module 11 is configured to receive TXOP grant information, where the TXOP grant information includes information indicating each TXOP in a reserve period of each service interval in one beacon interval, and a device to which each TXOP is granted. The processing module 12 is configured to contend for a current TXOP by using a first mode if there is to-be-sent data of a first type in a transmit queue of the communication apparatus 1, and the communication apparatus 1 determines, based on the TXOP grant information, that the current TXOP is granted to the first device. The processing module 12 is further configured to contend for the current TXOP by using a second mode if there is the to-be-sent data of the first type in a transmit queue of the communication apparatus 1, and the communication apparatus 1 determines, based on the TXOP grant information, that the current TXOP is not granted to the first device. Duration that corresponds to the first mode and in which a medium remains idle before sending of a frame is allowed is less than duration that corresponds to the second mode and in which a medium remains idle before sending of a frame is allowed.

Optionally, the processing module 12 is specifically configured to: contend for the current TXOP by using a second mode of a first priority if there is the to-be-sent data of the first type in the transmit queue of the communication apparatus 1, the communication apparatus 1 determines, based on the TXOP grant information, that the current TXOP is not granted to the first device, and the TXOP grant information includes a TXOP granted to the communication apparatus 1; or contend for the current TXOP by using a second mode of a second priority if there is the to-be-sent data of the first type in the transmit queue of the communication apparatus 1, the communication apparatus 1 determines, based on the TXOP grant information, that the current TXOP is not granted to the first device, and the TXOP grant information does not include the TXOP granted to the communication apparatus 1. Duration that corresponds to the second mode of the first priority and in which a medium remains idle before sending of a frame is allowed is less than duration that corresponds to the second mode of the second priority and in which a medium remains idle before sending of a frame is allowed.

Optionally, the information indicating each TXOP includes one or more of the following: a start time, duration, and an end time of each TXOP.

Optionally, the TXOP grant information further includes one or more of the following: a service interval count in one beacon interval, duration of one service interval, reserve period duration of each service interval, an offset of the first reserve period from a nearest target beacon transmission time TBTT, a quantity of TXOPs in a reserve period of each service interval, and duration of a guard band.

Optionally, duration of each TXOP is a preset value.

Optionally, the transceiver module 11 is further configured to send TXOP application information, where the TXOP application information includes a to-be-transmitted traffic volume in one beacon interval and/or a mean data rate. The to-be-transmitted traffic volume in one beacon interval and/or the mean data rate are/is used to determine duration of a TXOP granted to the first device in a reserve period of each service interval in the one beacon interval.

It should be understood that the communication apparatus 1 may correspondingly perform the foregoing method embodiments, and the foregoing operations or functions of the units in the communication apparatus 1 are separately used to implement corresponding operations of the first device in the foregoing method embodiments. For brevity, details are not described herein again.

Refer to FIG. 15. FIG. 15 is a schematic diagram of a structure of a communication apparatus 2 according to an embodiment of this application. The communication apparatus 2 may be the second device or a chip in the second device, for example, a Wi-Fi chip. As shown in the FIG. 15, the communication apparatus 2 may include a transceiver module 21, optionally, may further include a contention module 22 and a determining module 23.

The transceiver module 21 is configured to send TXOP grant information, where the TXOP grant information includes information indicating each TXOP in a reserve period of each service interval in one beacon interval, and a device to which each TXOP is granted.

Optionally, the contention module 22 is specifically configured to: contend for a current TXOP by using a first mode if there is to-be-sent data of a first type in a transmit queue of the communication apparatus 2, and the communication apparatus 2 determines, based on the TXOP grant information, that the current TXOP is granted to the communication apparatus 2; or contend for the current TXOP by using a second mode if there is the to-be-sent data of the first type in the transmit queue of the communication apparatus 2, and the communication apparatus 2 determines, based on the TXOP grant information, that the current TXOP is not granted to the communication apparatus 2. Duration that corresponds to the first mode and in which a medium remains idle before sending of a frame is allowed is less than duration that corresponds to the second mode and in which a medium remains idle before sending of a frame is allowed.

Optionally, the contention module 22 is specifically configured to: contend for the current TXOP by using a second mode of a first priority if there is the to-be-sent data of the first type in the transmit queue of the communication apparatus 2, the communication apparatus 2 determines, based on the TXOP grant information, that the current TXOP is not granted to the communication apparatus 2, and the TXOP grant information includes a TXOP granted to the communication apparatus 2; or contend for the current TXOP by using a second mode of a second priority if there is the to-be-sent data of the first type in the transmit queue of the communication apparatus 2, the communication apparatus 2 determines, based on the TXOP grant information, that the current TXOP is not granted to the communication apparatus 2, and the TXOP grant information does not include the TXOP granted to the communication apparatus 2. Duration that corresponds to the second mode of the first priority and in which a medium remains idle before sending of a frame is allowed is less than duration that corresponds to the second mode of the second priority and in which a medium remains idle before sending of a frame is allowed.

Optionally, the information indicating each TXOP includes one or more of the following: a start time, duration, and an end time of each TXOP.

Optionally, the TXOP grant information further includes one or more of the following: a service interval count in one beacon interval, duration of one service interval, reserve period duration of each service interval, an offset of the first reserve period from a nearest target beacon transmission time TBTT, a quantity of TXOPs in a reserve period of each service interval, and duration of a guard band.

Optionally, duration of each TXOP is a preset value.

Optionally, the transceiver module 21 is further configured to receive TXOP application information sent by the first device, where the TXOP application information includes a to-be-transmitted traffic volume in one beacon interval and/or a mean data rate. The determining module 23 is configured to determine, based on the TXOP application information, duration of a TXOP granted to the first device in a reserve period of each service interval in the one beacon interval.

Optionally, the determining module 23 is specifically configured to: determine, based on the TXOP application information, total TXOP duration required by the to-be-transmitted traffic volume in the one beacon interval; and allocate the total TXOP duration evenly to the reserve period of each service interval in the one beacon interval, to obtain the duration of the TXOP granted to the first device in the reserve period of each service interval.

The contention module 22 and the determining module 23 may be integrated into one module, for example, a processing module.

It should be understood that the communication apparatus 2 may correspondingly perform the foregoing method embodiments, and the foregoing operations or functions of the units in the communication apparatus 2 are separately used to implement corresponding operations of the second device in the foregoing method embodiments. For brevity, details are not described herein again.

The first device and the second device in embodiments of this application are described above, and possible product forms of the first device and the second device are described below. It should be understood that a product in any form that has a function of the first device in FIG. 14 and a product in any form that has a function of the second device in FIG. 15 fall within the protection scope of embodiments of this application. It should be further understood that the following descriptions are merely examples, and the product forms of the first device and the second device in embodiments of this application are not limited thereto.

In a possible product form, the first device and the second device in embodiments of this application may be implemented by a general bus architecture.

For ease of descriptions, refer to FIG. 16. FIG. 16 is a schematic diagram of a structure of a communication apparatus 1000 according to an embodiment of this application. The communication apparatus 1000 may be a first device, a second device, or a chip in the first device or a second device. FIG. 16 shows only main components of the communication apparatus 1000. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and the data. The transceiver 1002 may include a control circuit and an antenna. The control circuit is mainly configured to convert a baseband signal and a radio frequency signal and process a radio frequency signal. The antenna is mainly configured to receive and transmit radio frequency signals in a form of an electromagnetic wave. The input/output apparatus, for example, a touchscreen, a display, or a keyboard, is mainly configured to receive data input by a user and output data to the user.

After the communication apparatus is powered on, the processor 1001 can read a software program in the memory 1003, interpret and execute instructions of the software program, and process data of the software program. When data needs to be sent wirelessly, after performing baseband processing on the to-be-sent data, the processor 1001 outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives the radio frequency signal through the antenna, converts the radio frequency signal into the baseband signal, and outputs the baseband signal to the processor 1001. The processor 1001 converts the baseband signal into data and processes the data.

In another implementation, the radio frequency circuit and the antenna may be disposed independently of the processor that performs baseband processing. For example, in a distributed scenario, the radio frequency circuit and the antenna may be independent of a communication apparatus. In this case, a separation and remote architecture is formed.

The processor 1001, the transceiver 1002, and the memory 1003 may be connected by using a communication bus.

In a design, the communication apparatus 1000 may be configured to perform a function of the first device in the foregoing method embodiments. The processor 1001 may be configured to perform step S103 and step S104 in FIG. 5, and/or configured to perform another process of the technology described in this specification. The transceiver 1002 may be configured to perform step S102 in FIG. 5, and/or configured to perform another process of the technology described in this specification.

In another design, the communication apparatus 1000 may be configured to perform a function of the second device in the foregoing method embodiments.

The processor 1001 may be configured to generate the TXOP grant information sent in step S101 in FIG. 5, and/or configured to perform another process of the technology described in this specification. The transceiver 1002 may be configured to perform step S101 in FIG. 5, and/or configured to perform another process of the technology described in this specification.

In any one of the foregoing designs, the processor 1001 may include a transceiver configured to implement a receiving function and a sending function. For example, the transceiver may be a transceiver circuit, an interface, or an interface circuit. Transceiver circuits, interfaces, or interface circuits that are configured to implement receiving and sending functions may be separated, or may be integrated together. The transceiver circuit, the interface, or the interface circuit may be configured to read or write code/data, or the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 can perform the method described in any one of the foregoing method embodiments. The computer program may be fixed in the processor 1001. In this case, the processor 1001 may be implemented by hardware.

In an implementation, the communication apparatus 1000 may include a circuit, and the circuit may implement a sending, receiving, or communication function in the foregoing method embodiments. The processor and the transceiver described in embodiments of this application may be implemented in an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), printed circuit board (printed circuit board, PCB), an electronic device, and the like. The processor and transceiver may also be fabricated by using various IC processing technologies, such as complementary metal oxide semiconductor (complementary metal oxide semiconductor, CMOS), nMetal-oxide-semiconductor (nMetal-oxide-semiconductor, NMOS), positive channel metal oxide semiconductor (positive channel metal oxide semiconductor, PMOS), bipolar junction transistor, (bipolar junction transistor, BJT), bipolar CMOS (BiCMOS), and silicon germanium (SiGe), gallium arsenide (GaAs).

A scope of the communication apparatus described in this embodiment of this application is not limited thereto, and a structure of the communication apparatus is not be limited in FIG. 16. The communication apparatus may be an independent device or may be a part of a larger device. For example, the communication apparatus may be:

(1) an independent integrated circuit IC, a chip, or a chip system or subsystem;

(2) a set that has one or more ICs, where optionally, the IC set may also include a storage component configured to store data and a computer program;

(3) an ASIC like a modem (Modem);

(4) a module that can be embedded in another device;

(5) a receiver, a terminal, a smart terminal, a cellular phone, a wireless device, a handset, a mobile unit, an in-vehicle device, a network device, a cloud device, an artificial intelligence device, and the like; and

(6) other devices.

In a possible product form, the first device and the second device in this embodiment of this application may be implemented by a general-purpose processor.

The general-purpose processor implementing the first device includes a processing circuit and an input/output interface that is internally connected to and communicates with the processing circuit. The general-purpose processor may be configured to perform a function of the first device in the foregoing method embodiment. Specifically, the processing circuit may be configured to perform step S103 and step S 104 in FIG. 5, and/or configured to perform another process of the technology described in this specification. The input/output interface may be configured to perform step S 102 in FIG. 5, and/or configured to perform another process of the technology described in this specification.

The general-purpose processor implementing the second device includes a processing circuit and an input/output interface that is internally connected to and communicates with the processing circuit. The general-purpose processor may be configured to perform a function of the second device in the foregoing method embodiments. Specifically, the processing circuit may be configured to generate the TXOP grant information sent in step S101 in FIG. 5, and/or configured to perform another process of the technology described in this specification. The input/output interface may be configured to perform step S 101 in FIG. 5, and/or configured to perform another process of the technology described in this specification.

It should be understood that the foregoing communication apparatuses in various product forms have any function of the first device or the second device in the foregoing method embodiments. The details are not described herein again.

An embodiment of this application further provides a computer-readable storage medium. The computer-readable storage medium stores computer program code. When the processor executes the computer program code, the electronic device performs the method in the foregoing embodiments.

According to an embodiment of this application, a computer program product is further provided. When the computer program product runs on a computer, the computer is enabled to perform the method in the foregoing embodiments.

According to an embodiment of this application, a communication apparatus is further provided. The communication apparatus may exist in a product form of a chip. A structure of the communication apparatus includes a processor and an interface circuit. The processor is configured to communicate with another apparatus through a receiving circuit, so that the communication apparatus performs the method in the foregoing embodiments.

According to an embodiment of this application, a wireless communication system is further provided, including a first device and a second device. The first device and the second device may perform the method in the foregoing embodiments.

Methods or algorithm steps described with reference to the content disclosed in this application may be implemented by hardware, or may be implemented by a processor executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk drive, a removable hard disk, a compact disc read-only memory (CD-ROM), or any other form of storage medium well-known in the art. For example, a storage medium is coupled to a processor, so that the processor can read information from the storage medium and write information into the storage medium. The storage medium may be a component of the processor. The processor and the storage medium may be in an ASIC. The ASIC may be in a core network interface device. The processor and the storage medium may alternatively exist in the core network interface device as independent components.

A person skilled in the art should be aware that in the foregoing one or more examples, functions described in this application may be implemented by hardware, software, firmware, or any combination thereof. When the functions are implemented by software, the functions may be stored in a computer-readable medium or transmitted as one or more instructions or code in a computer-readable medium. The computer-readable medium includes a computer-readable storage medium and a communication medium, where the communication medium includes any medium that facilitates transmission of a computer program from one place to another. The storage medium may be any available medium accessible to a general-purpose or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application.

Any modification, equivalent replacement, improvement, or the like made based on the technical solutions of this application shall fall within the protection scope of this application.

A person of ordinary skill in the art may understand that all or some of the procedures of the methods in the embodiments may be implemented by a computer program instructing related hardware. The program may be stored in a computer-readable storage medium. When the program is run, the procedures of the method embodiments may be performed. The foregoing storage medium includes any medium that can store program code, for example, a ROM, a random access memory RAM, a magnetic disk, or an optical disc.

## Claims

1. A method for scheduling a time resource in a wireless local area network, comprising:

   receiving, by a first device, transmission opportunity TXOP grant information, wherein the TXOP grant information comprises information indicating each TXOP in a reserve period of each service interval in one beacon interval, and a device to which each TXOP is granted; and
   contending, by the first device, for a current TXOP by using a first mode if there is to-be-sent data of a first type in a transmit queue of the first device, and the first device determines, based on the TXOP grant information, that the current TXOP is granted to the first device; or
   contending, by the first device, for the current TXOP by using a second mode if there is the to-be-sent data of the first type in the transmit queue of the first device, and the first device determines, based on the TXOP grant information, that the current TXOP is not granted to the first device, wherein
   duration that corresponds to the first mode and in which a medium remains idle before sending of a frame is allowed is less than duration that corresponds to the second mode and in which a medium remains idle before sending of a frame is allowed.

2. The method according to claim 1, wherein the contending, by the first device, for the current TXOP by using a second mode if there is the to-be-sent data of the first type in the transmit queue of the first device, and the first device determines, based on the TXOP grant information, that the current TXOP is not granted to the first device comprises:

   contending, by the first device, for the current TXOP by using a second mode of a first priority if there is the to-be-sent data of the first type in the transmit queue of the first device, the first device determines, based on the TXOP grant information, that the current TXOP is not granted to the first device, and the TXOP grant information comprises a TXOP granted to the first device; or

contending, by the first device, for the current TXOP by using a second mode of a second priority if there is the to-be-sent data of the first type in the transmit queue of the first device, the first device determines, based on the TXOP grant information, that the current TXOP is not granted to the first device, and the TXOP grant information does not comprise the TXOP granted to the first device, wherein

duration that corresponds to the second mode of the first priority and in which a medium remains idle before sending of a frame is allowed is less than duration that corresponds to the second mode of the second priority and in which a medium remains idle before sending of a frame is allowed.

3. The method according to claim 1 or 2, wherein the information indicating each TXOP comprises one or more of the following: a start time, duration, and an end time of each TXOP.

4. The method according to any one of claims 1 to 3, wherein the TXOP grant information further comprises one or more of the following: a service interval count in one beacon interval, duration of one service interval, reserve period duration of each service interval, an offset of the first reserve period from a nearest target beacon transmission time TBTT, a quantity of TXOPs in a reserve period of each service interval, and duration of a guard band.

5. The method according to any one of claims 1 to 4, wherein duration of each TXOP is a preset value.

6. The method according to any one of claims 1 to 4, wherein the method further comprises:

sending, by the first device, TXOP application information, wherein the TXOP application information comprises a to-be-transmitted traffic volume in one beacon interval and/or a mean data rate, wherein

the to-be-transmitted traffic volume in one beacon interval and/or the mean data rate are/is used to determine duration of a TXOP granted to the first device in a reserve period of each service interval in the one beacon interval.

7. A method for scheduling a time resource in a wireless local area network, comprising:
sending, by a second device, transmission opportunity TXOP grant information, wherein the TXOP grant information comprises information indicating each TXOP in a reserve period of each service interval in one beacon interval, and a device to which each TXOP is granted.

8. The method according to claim 7, wherein the method further comprises:

contending, by the second device, for a current TXOP by using a first mode if there is to-be-sent data of a first type in a transmit queue of the second device, and the second device determines, based on the TXOP grant information, that the current TXOP is granted to the second device; or

contending, by the second device, for the current TXOP by using a second mode if there is the to-be-sent data of the first type in the transmit queue of the second device, and the second device determines, based on the TXOP grant information, that the current TXOP is not granted to the second device, wherein

duration that corresponds to the first mode and in which a medium remains idle before sending of a frame is allowed is less than duration that corresponds to the second mode and in which a medium remains idle before sending of a frame is allowed.

9. The method according to claim 8, wherein the contending, by the second device, for the current TXOP by using a second mode if there is the to-be-sent data of the first type in the transmit queue of the second device, and the second device determines, based on the TXOP grant information, that the current TXOP is not granted to the second device comprises:

contending, by the second device, for the current TXOP by using a second mode of a first priority if there is the to-be-sent data of the first type in the transmit queue of the second device, the second device determines, based on the TXOP grant information, that the current TXOP is not granted to the second device, and the TXOP grant information comprises a TXOP granted to the second device; or

contending, by the second device, for the current TXOP by using a second mode of a second priority if there is the to-be-sent data of the first type in the transmit queue of the second device, the second device determines, based on the TXOP grant information, that the current TXOP is not granted to the second device, and the TXOP grant information does not comprise the TXOP granted to the second device, wherein

duration that corresponds to the second mode of the first priority and in which a medium remains idle before sending of a frame is allowed is less than duration that corresponds to the second mode of the second priority and in which a medium remains idle before sending of a frame is allowed.

10. The method according to any one of claims 7 to 9, wherein the information indicating each TXOP comprises one or more of the following: a start time, duration, and an end time of each TXOP.

11. The method according to any one of claims 7 to 10, wherein the TXOP grant information further comprises one or more of the following: a service interval count in one beacon interval, duration of one service interval, reserve period duration of each service interval, an offset of the first reserve period from a nearest target beacon transmission time TBTT, a quantity of TXOPs in a reserve period of each service interval, and duration of a guard band.

12. The method according to any one of claims 7 to 11, wherein duration of each TXOP is a preset value.

13. The method according to any one of claims 7 to 11, wherein the method further comprises:

receiving, by the second device, TXOP application information sent by the first device, wherein the TXOP application information comprises a to-be-transmitted traffic volume in one beacon interval and/or a mean data rate; and determining, by the second device based on the TXOP application information, duration of a TXOP granted to the first device in a reserve period of each service interval in the one beacon interval.

14. The method according to claim 13, wherein the determining, by the second device based on the TXOP application information, duration of a TXOP granted to the first device in a reserve period of each service interval in the one beacon interval comprises:

determining, by the second device based on the TXOP application information, total TXOP duration required by the to-be-transmitted traffic volume in the one beacon interval; and allocating, by the second device, the total TXOP duration evenly to the reserve period of each service interval in the one beacon interval, to obtain the duration of the TXOP granted to the first device in the reserve period of each service interval.

15. A communication apparatus, comprising a processor and a transceiver, wherein the transceiver is configured to send and receive TXOP grant information, and the processor is configured to execute program instructions, so that the electronic device performs the method according to any one of claims 1 to 6.

16. A communication apparatus, comprising a processor and a transceiver, wherein the transceiver is configured to send and receive TXOP grant information, and the processor is configured to execute program instructions, so that the electronic device performs the method according to any one of claims 7 to 14.

17. The communication apparatus according to claim 15 or 16, wherein the communication apparatus further comprises a memory, the memory is configured to store a computer program, and the computer program comprises program instructions.

18. A computer-readable storage medium, wherein the computer-readable storage medium stores a computer program, the computer program comprises program instructions, and when the program instructions are executed by a computer, the computer is enabled to perform the method according to any one of claims 1 to 6.

19. A computer-readable storage medium, wherein the computer-readable storage medium stores a computer program, the computer program comprises program instructions, and when the program instructions are executed by a computer, the computer is enabled to perform the method according to any one of claims 7 to 14.

20. A computer program product, wherein when the computer program product runs on a computer, the computer is enabled to perform the method according to any one of claims 1 to 6.

21. A computer program product, wherein when the computer program product runs on a computer, the computer is enabled to perform the method according to any one of claims 7 to 14.

22. A communication apparatus, comprising a processor and an interface circuit, wherein

the interface circuit is configured to receive code instructions and transmit the code instructions to the processor; and the processor is configured to run the code instructions to perform the method according to any one of claims 1 to 6.

23. A communication apparatus, comprising a processor and an interface circuit, wherein

the interface circuit is configured to receive code instructions and transmit the code instructions to the processor; and

the processor is configured to run the code instructions to perform the method according to any one of claims 7 to 14.

24. A communication system, comprising a first device and a second device, wherein

the first device comprises a unit or a module configured to perform the method according to any one of claims 1 to 6, and the second device comprises a unit or a module configured to perform the method according to any one of claims 7 to 14.

FIG. 1

FIG. 2a

FIG. 2b

An NAV value of a node is set in the beacon frame of the CFP

A point coordinator (PC) polls stations connected to the point coordinator in sequence according to an internal polling list, to check whether the stations have to-be-transmitted data

| | CFP repetition interval | | |
|---|---|---|---|
| | Competition-free period (CFP) | | Competition period (CP) |
| Beacon Beacon | PCF | CF-END | DCF |

NAV → Time

FIG. 3

Internet/Internet

STA 1 ← AP_m → STA 4

STA 2 ← AP_s → STA 3

FIG. 4

Second device

First device

S101: Send transmission opportunity (transmission opportunity, TXOP) grant information, where the TXOP grant information includes information indicating each TXOP in a reserve period of each service interval in one beacon interval, and a device to which each TXOP is granted

S102: Receive the TXOP grant information

S103: Contend for a current TXOP by using a first mode if there is to-be-sent data of a first type (deterministic-latency data) in a transmit queue of the first device, and the first device determines, based on the TXOP grant information, that the current TXOP is granted to the first device

S104: Contend for the current TXOP by using a second mode if there is the to-be-sent data of the first type (deterministic-latency data) in the transmit queue of the first device and the first device determines, based on the TXOP grant information, that the current TXOP is not granted to the first device

FIG. 5

There are several
service intervals in
one beacon interval

Duration of one
service interval (us)

Detailed
information of a
reserve period

Duration of a
guard band

| Element ID<br>Element<br>identifier | Length<br>Length | SI count<br>Service<br>interval<br>count | SI duration<br>Service<br>interval<br>duration | RP duration<br>Reserve<br>period<br>duration | RP offset<br>Reserve<br>period offset | RP record<br>Reserve<br>period record | GB duration<br>Guard band<br>duration |
|---|---|---|---|---|---|---|---|

Reserve period
duration (us) in a
service interval

An offset (us) of the first
reserve period from a
nearest TBTT

FIG. 6

| TXOP count | TXOP offset 1 | TXOP duration 1 | TXOP target STA 1 | ... | TXOP offset n | TXOP duration n | TXOP target STA n |
| TXOP count | TXOP offset 1 | TXOP duration 1 | TXOP target STA 1 | ... | TXOP offset n | TXOP duration n | TXOP target STA n |

RP record
Reserve period record

TXOP information of a specific subscribed device

FIG. 7

To-be-transmitted
traffic volume (KByte)
in one beacon interval

Mean data
transmission rate

| Element ID Element identifier | Length Length | Message size Message size | Mean data rate Mean data rate |
|---|---|---|---|

FIG. 8

FIG. 9

| TXOP 1 (STA 1) | TXOP 2 (STA 2) | TXOP 3 (STA 3) | TXOP 4 (AP) | | TXOP 1 (STA 1) | TXOP 2 (STA 2) | TXOP 3 (STA 3) | TXOP 4 (AP) | |
|---|---|---|---|---|---|---|---|---|---|

Beacon interval/Beacon interval

Reserve period/Reserve period — Non-reserve period / Non-reserve period — Reserve period/Reserve period — Non-reserve period / Non-reserve period ...

Service interval/Service interval — Service interval/Service interval

Time (time)

FIG. 9

EP 4 429 301 A1

FIG. 10

FIG. 11

FIG. 12

Non-reserve period/Non-reserve period

FIG. 13

Communication apparatus 1

FIG. 14

Communication apparatus 2

FIG. 15

Communication apparatus 1000

1001

Processor

Instruction

1003

Memory

Instruction

Transceiver 1002

Control circuit

Antenna

FIG. 16

## INTERNATIONAL SEARCH REPORT

International application No.

**PCT/CN2023/070447**

### A. CLASSIFICATION OF SUBJECT MATTER

H04W 16/10(2009.01)i

According to International Patent Classification (IPC) or to both national classification and IPC

### B. FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 信标, 间隔, 传输机会, 个数, 竞争, 确定, 时延, 设备, 授权, 许可, 预留, 准许, transmission opportunity, number, contention, determination, latency, device , STA, grant, reservation, beacon, LICENSE, TXOP, BI

### C. DOCUMENTS CONSIDERED TO BE RELEVANT

| Category* | Citation of document, with indication, where appropriate, of the relevant passages | Relevant to claim No. |
|---|---|---|
| X | CN 104041169 A (INTEL CORP.) 10 September 2014 (2014-09-10) description, paragraphs [0035]-[0089], and figures 1-4 | 1-24 |
| X | GB 2542819 A (CANON KABUSHIKI KAISHA) 05 April 2017 (2017-04-05) description, page 8, line 21 to page 18, line 20, and figures 1-11 | 1-24 |
| A | CN 111107632 A (TELECOMMUNICATIONS TECHNOLOGY RESEARCH INSTITUTE CO., LTD.) 05 May 2020 (2020-05-05) entire document | 1-24 |
| A | INTEL CORP. "LBT for UL grant transmission" *3GPP TSG RAN WG1 Meeting #84bis R1-162575*, 15 April 2016 (2016-04-15), entire document | 1-24 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 February 2023** | **20 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

# EP 4 429 301 A1

**INTERNATIONAL SEARCH REPORT**
Information on patent family members

International application No.

**PCT/CN2023/070447**

| Patent document cited in search report | | | Publication date (day/month/year) | Patent family member(s) | | | Publication date (day/month/year) |
|---|---|---|---|---|---|---|---|
| CN | 104041169 | A | 10 September 2014 | EP | 2803240 | A1 | 19 November 2014 |
| | | | | CA | 2860661 | A1 | 18 July 2013 |
| | | | | US | 2015055610 | A1 | 26 February 2015 |
| | | | | WO | 2013106382 | A1 | 18 July 2013 |
| | | | | US | 2013176993 | A1 | 11 July 2013 |
| | | | | IN | 201404886 | P4 | 18 September 2015 |
| GB | 2542819 | A | 05 April 2017 | GB | 201517299 | D0 | 11 November 2015 |
| CN | 111107632 | A | 05 May 2020 | WO | 2020082933 | A1 | 30 April 2020 |

Form PCT/ISA/210 (patent family annex) (July 2022)

42

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210027808